# EUROPEAN PATENT APPLICATION

(11) **EP 4 618 521 A1**
(43) Date of publication of application: **17.09.2025**
(21) Application number: 24806402.4
(22) Date of filing: 07.05.2024
(51) Int. Cl.: H04L 69/16

(54) **COMMUNICATION METHOD AND COMMUNICATION APPARATUS**

(30) Priority: 15.05.2023 CN 202310546789
(71) Applicant: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN)
(74) Representative: MERH-IP Matias Erny Reichl Hoffmann Patentanwälte PartG mbB
(86) International application number: PCT/CN2024/091387
(87) International publication number: WO 2024/235047

(57) **Abstract**

This application provides a communication method and a communication apparatus. In the method, transmission performance provided by a transmission server and computing performance provided by an application server may be comprehensively considered, so that a combination of a transmission server and an application server is discovered and/or selected. This helps satisfy an application requirement and/or provide optimal transmission performance and computing performance.

## Description

This application claims priority to Chinese Patent Application No. 202310546789.X, filed with the China National Intellectual Property Administration on May 15, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, a transmission server (service enabler architecture layer data delivery server, SEALDD server) may cooperate with an SEALDD client (SEALDD client) to provide communication connection and data transmission functions (supporting transmission of application/media data and signaling data) for a vertical application layer (vertical application layer, VAL) application. For example, communication and data transmission between a VAL client (VAL client) and a VAL server (VAL server) need to be performed via the SEALDD client and the SEALDD server. However, for a scenario in which an SEALDD server and a VAL server are deployed in a distributed manner, how to jointly discover and select an SEALDD server and a VAL server becomes a problem to be resolved.

### SUMMARY

This application provides a communication method and a communication apparatus. A combination of an SEALDD server and a VAL server selected in the method satisfies a VAL application requirement and/or provides optimal transmission performance and computing performance.

According to a first aspect, this application provides a communication method. The method is performed by a first entity. In a possible implementation, the first entity may be an edge enabler server EES, a component (for example, a processor, a chip, or a chip system) of the EES, or a logical module that can implement all or some EES functions. In a possible implementation, the first entity may be an edge enabler client EEC, a component (for example, a processor, a chip, or a chip system) of the EEC, or a logical module that can implement all or some EEC functions. The first entity obtains transmission performance of a transmission server and computing performance of an application server, and determines a combination of a first transmission server and a first application server based on the transmission performance of the transmission server and the computing performance of the application server.

In the method, the first entity may comprehensively consider the transmission performance provided by the transmission server and the computing performance provided by the application server, to discover and/or select the combination of the transmission server and the application server. This helps satisfy an application requirement and/or provide optimal transmission performance and computing performance.

In a possible implementation, the first entity receives the transmission performance of the one or more transmission servers, or obtains the transmission performance of the transmission server from a second entity based on identification information and/or address information of the transmission server, or receives deployment location information of the one or more transmission servers.

In a possible implementation, the deployment location information of the transmission server is a data network access point identifier DNAI.

In a possible implementation, the second entity is an application data analytics enabler server ADAES or a network data analytics function NWDAF.

In the foregoing method, the first entity may obtain the transmission performance of the transmission server in a plurality of manners. For example, when the first entity is an EES, the EES may directly receive the transmission performance (for example, a statistical value of the transmission performance) of the one or more transmission servers. Alternatively, the EES obtains the transmission performance (for example, a prediction value of the transmission performance) of the transmission server from the second entity (for example, the application data analytics enabler server ADAES or the network data analytics function NWDAF) based on the identification information and/or the address information of the transmission server. Alternatively, the EES receives the deployment location information of the one or more transmission servers, where the deployment location information may indicate a location area in which the transmission server is located, deployment density, and the like (for example, the deployment location information is the DNAI), to indirectly indicate the transmission performance of the transmission server.

In a possible implementation, the first entity receives the computing performance of the one or more application servers, or obtains the computing performance of the application server from a second entity based on identification information and/or address information of the application server.

In the method, the first entity may obtain the computing performance of the application server in a plurality of manners. For example, when the first entity is an EES, the EES may directly receive the computing performance of the one or more application servers (for example, the computing performance may be load of the application server, or a statistical value of the load). Alternatively, the EES obtains the computing performance (for example, a prediction value of load) of the application server from the second entity (for example, an application data analytics enabler server ADAES or a network data analytics function NWDAF) based on the identification information and/or the address information of the application server.

In a possible implementation, the first entity receives the transmission performance of the corresponding transmission server. The first entity obtains information about a second enabler server corresponding to the application server, and obtains the computing performance of the application server from the second enabler server.

In this method, if the application server and the transmission server are deployed in or register to different EESs, one primary EES (for example, an EES to which the transmission server has registered) in the different EESs may obtain the transmission performance of the transmission server that has performed registration (for example, receive the transmission performance from the transmission server that has performed registration), and obtain the computing performance of the application server (for example, obtain the computing performance from an EES to which the application server has registered), to determine the combination of the transmission server and the application server.

In a possible implementation, the first entity receives the computing performance of the corresponding application server. The first entity obtains information about a first enabler server corresponding to the transmission server, and obtains the transmission performance of the transmission server from the first enabler server.

In this method, if the application server and the transmission server are deployed in or register to different EESs, one primary EES (for example, an EES to which the application server has registered) in the different EESs may obtain the computing performance of the application server that has performed registration (for example, receive the computing performance from the application server that has performed registration), and obtain the transmission performance of the transmission server (for example, receive the transmission performance from an EES to which the transmission server has registered), to determine the combination of the transmission server and the application server.

In a possible implementation, the first entity that obtains the transmission performance of the transmission server and the computing performance of the application server is an edge enabler server EES.

In a possible implementation, the first entity sends a first request message. The first request message includes identification information of the transmission server and identification information of the application server. The first entity receives a first response message. The first response message includes the transmission performance of the transmission server and the computing performance of the application server.

In the method, if the first entity is an edge enabler client EEC, the transmission performance of the transmission server and the computing performance of the application server may be indirectly obtained via an edge enabler server EES, to determine the combination of the transmission server and the application server.

In a possible implementation, the first entity obtains information about a first enabler server corresponding to the transmission server and information about a second enabler server corresponding to the application server. The first entity obtains the transmission performance of the transmission server from the first enabler server, and obtains the computing performance of the application server from the second enabler server.

In the method, if the application server and the transmission server are deployed in or register to different EESs, and the first entity is an edge enabler client EEC, the first entity may indirectly obtain the transmission performance of the transmission server and the computing performance of the application server via a first EES (for example, an EES to which the transmission server has registered) and a second EES (for example, an EES to which the application server has registered), to determine the combination of the transmission server and the application server.

In a possible implementation, the first entity that obtains the transmission performance of the transmission server and the computing performance of the application server is an edge enabler client EEC.

In a possible implementation, the first entity receives the computing performance of the application server and the transmission performance of the transmission server, or receives comprehensive information of the computing performance of the application server and the transmission performance of the transmission server. The comprehensive information is determined by the corresponding application server or the corresponding transmission server based on the transmission performance of the transmission server and the computing performance of the application server. For example, when the first entity is an EES, the EES receives the transmission performance reported by the SEALDD server, and receives the computing performance reported by the VAL server. Alternatively, the EES receives the comprehensive information that is of the transmission performance of the SEALDD server and the computing performance of the VAL server and that is reported by the SEALDD server or the VAL server. For another example, when the first entity is an EEC, the EEC receives a message from an EES. The message includes the transmission performance reported by the SEALDD server and the computing performance reported by the VAL server, or the message includes the comprehensive information of the transmission performance of the SEALDD server and the computing performance of the VAL server.

In the method, the first entity may comprehensively consider the transmission performance of the transmission server and the computing performance of the application server, and select the combination of the first application server and the first transmission server from a plurality of application servers and transmission servers.

In a possible implementation, the first entity that obtains the transmission performance of the transmission server and the computing performance of the application server is an edge enabler client EEC or an edge enabler server EES.

In a possible implementation, the first entity sends first indication information to an application client. The first indication information indicates the application client to use the first transmission server to enable data transmission of the first application server. Optionally, for a different first entity, the first indication information indicates an information receiving path. For example, when the first entity is an EES, the first indication information indicates the AC to receive information and/or data from the EES via an EEC. For another example, when the first entity is an EEC, the first indication information indicates the AC to receive information and/or data from the EEC.

In the method, the first entity may further send, to the application client AC, indication information indicating to use the transmission server to perform transmission, so that the AC may be connected to the application server via the transmission server (for example, the AC is connected to the application server via a transmission client and the transmission server), instead of being separately connected to the transmission server or the application server.

In a possible implementation, the first entity receives second indication information from the application server. The second indication information indicates whether the application server supports transmission server-enabled transmission. The first entity receives third information from the transmission server. The third information includes an application type supported by the transmission server.

In the method, the first entity may further obtain the second indication information indicating whether the application server supports transmission server-enabled transmission, and/or the application type supported by the transmission server.

In a possible implementation, the application type supported by the transmission server is an identifier of the application server.

In a possible implementation, the first entity determines the combination of the first transmission server and the first application server based on whether the application server supports transmission server-enabled transmission, the application type supported by the transmission server, the transmission performance of the transmission server, and the computing performance of the application server.

In the method, the first entity may specifically determine the combination that is of the transmission server and the application server and that can support transmission server-enabled transmission and an AC application, so that the AC can use the first transmission server to enable data transmission of the first application server.

In a possible implementation, if there is a transmission server supporting the application type in a plurality of transmission servers that have performed registration, and an application server of the application type supports transmission server-enabled transmission, the first entity determines a combination that is of a first transmission server and a first application server and that satisfies an application performance requirement, or determines a combination of a first transmission server and a first application server in which the transmission performance of the transmission server and the computing performance of the application server are comprehensively optimal.

In the method, if the application server supports transmission server-enabled transmission, and the transmission server supports the corresponding application type, the first entity may determine the combination that is of the first transmission server and the first application server and that satisfies the application performance requirement or has optimal comprehensive performance.

In a possible implementation, if there is no transmission server supporting the application type in the plurality of transmission servers that have performed registration, and/or an application server of the application type does not support transmission server-enabled transmission, the first entity determines the first application server, or sends fourth indication information to the application client. The fourth indication information indicates that selecting the combination of both the transmission server and the application server is not supported.

In the method, if the application server does not support transmission server-enabled transmission, and/or the transmission server does not support the corresponding application type, the first entity does not support selecting the combination of both the transmission server and the application server, and may select, by using a stipulation in an existing protocol standard, a corresponding application server for serving.

According to a second aspect, this application provides a communication method. The method is performed by a transmission server. In a possible implementation, the transmission server may be an SEALDD server, a component (for example, a processor, a chip, or a chip system) of the SEALDD server, or a logical module that can implement all or some SEALDD service functions. The transmission server obtains transmission performance of the transmission server, and sends the transmission performance of the transmission server.

In the method, the transmission server may determine the transmission performance of the transmission server, and report the transmission performance of the transmission server to a first entity (for example, an EES). This helps the first entity comprehensively consider the transmission performance provided by the transmission server and computing performance provided by an application server, to discover and/or select a combination of a transmission server and an application server.

In a possible implementation, the transmission server determines the transmission performance that is of the transmission server and that corresponds to a transmission quality measurement result, or obtains the transmission performance of the transmission server from a second entity based on identification information and/or address information of the transmission server, or determines the transmission performance of the transmission server based on deployment location information of the transmission server. The transmission quality measurement result includes transmission quality of a path between the transmission server and a terminal device. The second entity is an application data analytics enabler server ADAES or a network data analytics function NWDAF.

In the method, the transmission server may specifically determine the transmission performance based on the transmission quality measurement result, obtain the transmission performance (for example, a prediction value of the transmission performance) of the transmission server from the second entity (for example, the application data analytics enabler server ADAES or the network data analytics function NWDAF), or determine the transmission performance based on the deployment location information.

In a possible implementation, the transmission server receives the computing performance of the application server. The transmission server sends the computing performance of the application server and the transmission performance of the transmission server, or sends comprehensive information of the computing performance of the application server and the transmission performance of the transmission server.

In the method, the transmission server may send the computing performance of the application server and the transmission performance of the transmission server to the first entity. Alternatively, the transmission server directly determines the comprehensive information of the computing performance of the application server and the transmission performance of the transmission server, and sends the comprehensive information to the first entity. This helps the first entity comprehensively consider the computing performance of the application server and the transmission performance of the transmission server.

In a possible implementation, the transmission server sends third information. The third information includes an application type supported by the transmission server.

In a possible implementation, the application type supported by the transmission server is an identifier of the application server.

In the foregoing method, the transmission server may send the application type supported by the transmission server to the first entity.

According to a third aspect, this application provides a communication method. The method is performed by an application server. In a possible implementation, the application server may be a VAL server, a component (for example, a processor, a chip, or a chip system) of the VAL server, or a logical module that can implement all or some VAL service functions. The application server obtains computing performance of the application server, and sends the computing performance of the application server.

In the method, the application server may determine the computing performance of the application server, and report the computing performance of the application server to a first entity (for example, an EES). This helps the first entity comprehensively consider transmission performance provided by a transmission server and the computing performance provided by the application server, to discover and/or select a combination of a transmission server and an application server.

In a possible implementation, the application server determines the computing performance of the application server based on load of the application server, or obtains the computing performance of the application server from a second entity based on identification information and/or address information of the application server. The second entity is an application data analytics enabler server ADAES or a network data analytics function NWDAF.

In the method, the application server may determine the computing performance of the application server based on the load, or obtain the computing performance (for example, a prediction value of the computing performance) of the application server from the second entity.

In a possible implementation, the application server receives the transmission performance of the transmission server. The application server sends the computing performance of the application server and the transmission performance of the transmission server, or sends comprehensive information of the computing performance of the application server and the transmission performance of the transmission server.

In the method, the application server may send the computing performance of the application server and the transmission performance of the transmission server to the first entity. Alternatively, the application server directly determines the comprehensive information of the computing performance of the application server and the transmission performance of the transmission server, and sends the comprehensive information to the first entity. This helps the first entity comprehensively consider the computing performance of the application server and the transmission performance of the transmission server.

In a possible implementation, the application server sends second indication information, where the second indication information indicates whether the application server supports transmission server-enabled transmission.

In the method, the transmission server may send, to the first entity, the second indication information indicating whether to support transmission server-enabled transmission.

According to a fourth aspect, this application provides a communication apparatus. In a possible implementation, the communication apparatus may be an edge enabler server EES, an apparatus in the EES, or an apparatus that can be used together with the EES. In a possible implementation, the communication apparatus may be an edge enabler client EEC, an apparatus in the EEC, or an apparatus that can be used together with an EEC. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to obtain transmission performance of a transmission server and computing performance of an application server. The processing unit is configured to determine a combination of a first transmission server and a first application server based on the transmission performance of the transmission server and the computing performance of the application server.

In a possible implementation, the communication unit is configured to: receive the transmission performance of the one or more transmission servers; or obtain the transmission performance of the transmission server from a second entity based on identification information and/or address information of the transmission server; or receive deployment location information of the one or more transmission servers.

In a possible implementation, the deployment location information of the transmission server is a data network access point identifier DNAI.

In a possible implementation, the second entity is an application data analytics enabler server ADAES or a network data analytics function NWDAF.

In a possible implementation, the communication unit is configured to: receive the computing performance of the one or more application servers; or obtain the computing performance of the application server from a second entity based on identification information and/or address information of the application server.

In a possible implementation, the communication unit is configured to: receive the transmission performance of the corresponding transmission server; obtain information about a second enabler server corresponding to the application server; and obtain the computing performance of the application server from the second enabler server.

In a possible implementation, the communication unit is configured to: receive the computing performance of the corresponding application server; obtain information about a first enabler server corresponding to the transmission server; and obtain the transmission performance of the transmission server from the first enabler server.

In a possible implementation, a first entity that obtains the transmission performance of the transmission server and the computing performance of the application server is an edge enabler server EES.

In a possible implementation, the communication unit is configured to send a first request message. The first request message includes identification information of the transmission server and identification information of the application server. The communication unit is further configured to receive a first response message. The first response message includes the transmission performance of the transmission server and the computing performance of the application server.

In a possible implementation, the communication unit is configured to obtain information about a first enabler server corresponding to the transmission server and information about a second enabler server corresponding to the application server. The communication unit is further configured to: obtain the transmission performance of the transmission server from the first enabler server; and obtain the computing performance of the application server from the second enabler server.

In a possible implementation, a first entity that obtains the transmission performance of the transmission server and the computing performance of the application server is an edge enabler client EEC.

In a possible implementation, the communication unit is configured to: receive the computing performance of the application server and the transmission performance of the transmission server; or receive comprehensive information of the computing performance of the application server and the transmission performance of the transmission server. The comprehensive information is determined by the corresponding application server or the corresponding transmission server based on the transmission performance of the transmission server and the computing performance of the application server.

In a possible implementation, a first entity that obtains the transmission performance of the transmission server and the computing performance of the application server is an edge enabler client EEC or an edge enabler server EES.

In a possible implementation, the communication unit is configured to send first indication information to an application client. The first indication information indicates the application client to use the first transmission server to enable data transmission of the first application server.

In a possible implementation, the communication unit is configured to receive second indication information from the application server. The second indication information indicates whether the application server supports transmission server-enabled transmission. The communication unit is further configured to receive third information from the transmission server. The third information includes an application type supported by the transmission server.

In a possible implementation, the application type supported by the transmission server is an identifier of the application server.

In a possible implementation, the processing unit is configured to determine the combination of the first transmission server and the first application server based on whether the application server supports transmission server-enabled transmission, the application type supported by the transmission server, the transmission performance of the transmission server, and the computing performance of the application server.

In a possible implementation, if there is a transmission server supporting the application type in a plurality of transmission servers that have performed registration, and an application server of the application type supports transmission server-enabled transmission, the processing unit is configured to: determine a combination that is of a first transmission server and a first application server and that satisfies an application performance requirement; or determine a combination of a first transmission server and a first application server in which the transmission performance of the transmission server and the computing performance of the application server are comprehensively optimal.

In a possible implementation, if there is no transmission server supporting the application type in a plurality of transmission servers that have performed registration, and/or an application server of the application type does not support transmission server-enabled transmission, the processing unit is configured to determine the first application server. Alternatively, the communication unit is configured to send fourth indication information to the application client. The fourth indication information indicates that selecting the combination of both the transmission server and the application server is not supported.

According to a fifth aspect, this application provides a communication apparatus. In a possible implementation, the communication apparatus may be a transmission server, an apparatus in the transmission server, or an apparatus that can be used together with the transmission server. In a possible implementation, the communication apparatus may include a functional module. The functional module may be implemented by a hardware circuit, software, or a combination of a hardware circuit and software.

In a possible implementation, the communication apparatus includes a communication unit and a processing unit. The processing unit is configured to obtain transmission performance of the transmission server, and the communication unit is configured to send the transmission performance of the transmission server.

In a possible implementation, the processing unit is configured to determine the transmission performance that is of the transmission server and that corresponds to a transmission quality measurement result. Alternatively, the processing unit is configured to obtain, via the communication unit, the transmission performance of the transmission server from a second entity based on identification information and/or address information of the transmission server. Alternatively, the processing unit is configured to determine the transmission performance of the transmission server based on deployment location information of the transmission server. The transmission quality measurement result includes transmission quality of a path between the transmission server and a terminal device. The second entity is an application data analytics enabler server ADAES or a network data analytics function NWDAF.

In a possible implementation, the communication unit is configured to send third information. The third information includes an application type supported by the transmission server.

In a possible implementation, the application type supported by the transmission server is an identifier of the application server.

According to a sixth aspect, this application provides a communication apparatus. In a possible implementation, the communication apparatus may be an application server, an apparatus in the application server, or an apparatus that can be used together with the application server. In a possible implementation, the communication apparatus may include a functional module. The functional module may be implemented by a hardware circuit, software, or a combination of a hardware circuit and software.

In a possible implementation, the communication apparatus includes a communication unit and a processing unit. The processing unit is configured to obtain computing performance of the application server, and the communication unit is configured to send the computing performance of the application server.

In a possible implementation, the processing unit is configured to determine the computing performance of the application server based on load of the application server. Alternatively, the processing unit is configured to obtain, via the communication unit, the computing performance of the application server from a second entity based on identification information and/or address information of the application server. The second entity is an application data analytics enabler server ADAES or a network data analytics function NWDAF.

In a possible implementation, the communication unit is configured to receive transmission performance of a transmission server. The communication unit is further configured to: send the computing performance of the application server and the transmission performance of the transmission server, or send comprehensive information of the computing performance of the application server and the transmission performance of the transmission server.

In a possible implementation, the communication unit is configured to send second indication information. The second indication information indicates whether the application server supports transmission server-enabled transmission.

According to a seventh aspect, this application provides a communication apparatus. The communication apparatus includes a processor, configured to execute instructions. Optionally, the communication apparatus further includes a memory. The memory is configured to store the instructions. When the instructions are executed by the processor, the communication apparatus is enabled to implement the method according to any one of the first aspect or the possible implementations of the first aspect. Optionally, the processor is coupled to the memory.

According to an eighth aspect, this application provides a communication apparatus. The communication apparatus includes a processor, configured to execute instructions. Optionally, the communication apparatus further includes a memory. The memory is configured to store the instructions. When the instructions are executed by the processor, the communication apparatus is enabled to implement the method according to any one of the second aspect or the possible implementations of the second aspect. Optionally, the processor is coupled to the memory.

According to a ninth aspect, this application provides a communication apparatus. The communication apparatus includes a processor, configured to execute instructions. Optionally, the communication apparatus further includes a memory. The memory is configured to store the instructions. When the instructions are executed by the processor, the communication apparatus is enabled to implement the method according to any one of the third aspect or the possible implementations of the third aspect. Optionally, the processor is coupled to the memory.

According to a tenth aspect, this application provides a communication system. The communication system includes a plurality of apparatuses or devices according to the fourth aspect to the ninth aspect, so that the apparatuses or devices perform the method according to any one of the first aspect to the third aspect or the possible implementations of the first aspect to the third aspect.

According to an eleventh aspect, this application provides a computer-readable storage medium. The computer-readable storage medium stores instructions. When the instructions are run on a computer, the computer is enabled to perform the method according to any one of the first aspect to the third aspect or the possible implementations of the first aspect to the third aspect.

According to a twelfth aspect, this application provides a chip system. The chip system includes a processor and an interface. Optionally, the chip system may further include a memory. The chip system is configured to implement the method according to any one of the first aspect to the third aspect or the possible implementations of the first aspect to the third aspect. The chip system may include a chip, or may include a chip and another discrete component.

According to a thirteenth aspect, this application provides a computer program product. The computer program product includes instructions. When the instructions are run on a computer, the computer is enabled to perform the method according to any one of the first aspect to the third aspect or the possible implementations of the first aspect to the third aspect.

### BRIEF DESCRIPTION OF DRAWINGS

FIG. 1 is a diagram of a communication system according to this application;
FIG. 2 is a diagram of an SEALDD architecture;
FIG. 3 is a diagram of transmission performed in an SEALDD architecture;
FIG. 4 is a diagram of an EDGEAPP architecture scenario;
FIG. 5a is a diagram of a service provisioning procedure;
FIG. 5b is a diagram of an EAS discovery procedure;
FIG. 6 is a diagram of a procedure in which a VAL server and an SEALDD server associated with the VAL server are determined on a server side;
FIG. 7 is a schematic flowchart of a communication method according to this application;
FIG. 8 is a schematic flowchart in which an enabler server determines a combination of a first transmission server and a first application server based on transmission performance of a transmission server and computing performance of an application server according to this application;
FIG. 9A and FIG. 9B are a schematic flowchart in which an enabler client determines a combination of a first transmission server and a first application server based on transmission performance of a transmission server and computing performance of an application server according to this application;
FIG. 10A and FIG. 10B are another schematic flowchart in which an enabler client determines a combination of a first transmission server and a first application server based on transmission performance of a transmission server and computing performance of an application server according to this application;
FIG. 11A, FIG. 11B, and FIG. 11C are another schematic flowchart in which an enabler server determines a combination of a first transmission server and a first application server based on transmission performance of a transmission server and computing performance of an application server according to this application;
FIG. 12A and FIG. 12B are a schematic flowchart in which an enabler server determines a combination of a first transmission server and a first application server based on comprehensive information of transmission performance of a transmission server and computing performance of an application server according to this application;
FIG. 13A, FIG. 13B, and FIG. 13C are a schematic flowchart in which an enabler client determines a combination of a first transmission server and a first application server based on comprehensive information of transmission performance of a transmission server and computing performance of an application server according to this application;
FIG. 14 is a schematic flowchart in which a third entity determines a combination of a first transmission server and a first application server based on transmission performance of a transmission server and computing performance of an application server according to this application;
FIG. 15 is a diagram of a communication apparatus according to this application; and
FIG. 16 is a diagram of another communication apparatus according to this application.

### DESCRIPTION OF EMBODIMENTS

In embodiments of this application, "/" may represent an "or" relationship between associated objects. For example, A/B may represent A or B. "and/or" may represent that there are three relationships between associated objects. For example, A and/or B may represent the following three cases: Only A exists, both A and B exist, and only B exists, where A and B may be singular or plural. For ease of describing the technical solutions in embodiments of this application, words such as "first" and "second" may be used in embodiments of this application to distinguish between technical features with a same or similar function. The words such as "first" and "second" do not limit a quantity and an execution sequence, and the words such as "first" and "second" do not limit a definite difference. In embodiments of this application, the word such as "example" or "for example" represents an example, evidence, or a description. Any embodiment or design solution described as "example" or "for example" should not be explained as being more preferred or having more advantages than another embodiment or design solution. The word such as "example" or "for example" is for presenting a related concept in a specific manner for ease of understanding.

The following describes the technical solutions in embodiments of this application with reference to the accompanying drawings in embodiments of this application.

To resolve a problem of how to jointly discover and select a transmission server and an application server in a scenario in which the transmission server (for example, an SEALDD server) and an application server (for example, a VAL server) are deployed in a distributed manner, this application provides a communication method and a communication apparatus. A combination of a transmission server and a transmission server selected in the method can satisfy an application requirement and/or provide optimal transmission performance and computing performance.

A service enabler architecture layer data delivery (service enabler architecture layer data delivery, SEALDD) service described in this application may be referred to as an SEALDD service for short. A service enabler architecture layer data delivery server may be referred to as a transmission server or an SEALDD server for short. A service enabler architecture layer data delivery client may be referred to as a transmission client or an SEALDD client for short. It may be understood that the foregoing short names are merely examples, and the SEALDD server/the SEALDD client each may implement the service enabler architecture layer data delivery service. In other words, all parts referred to as SEALDD for short in this application may be replaced with service enabler architecture layer data delivery. Optionally, a transmission server in this application may also be referred to as a data transmission enhancement layer server (mainly configured to provide a data transmission service, and belongs to an enabler layer (enabler layer) or an enhancement layer). A vertical application layer (vertical application layer, VAL) service described in this application may be referred to as a VAL service for short. A vertical application layer server may be referred to as an application server for short. It may be understood that all parts referred to as VALs for short in this application may be replaced with vertical application layers.

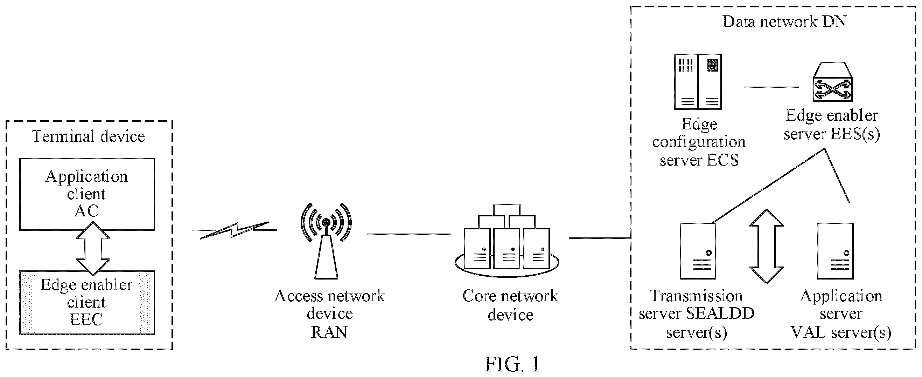

The communication method provided in this application may be applied to a communication system shown in FIG. 1. For example, the communication system may be of a service enabler architecture layer data delivery service architecture (for example, referred to as an SEALDD service architecture for short). The communication system includes entities or network elements such as a terminal device (including an application client (application client, AC) and/or an edge enabler client (edge enabler client, EEC)), a radio access network (radio access network, RAN) device, a core network device, an edge enabler server (edge enabler server, EES), an edge configuration server (edge configuration server, ECS), a transmission server (for example, an SEALDD server), an application server (for example, and a vertical application layer (vertical application layer, VAL) server).

The terminal device, also referred to as user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like. Optionally, the AC and/or the EEC may be used as a part of the terminal device, and run on the terminal device in a form of software or a system component.

The access network device, also referred to as a base station, is a radio access network (radio access network, RAN) node (or device) that connects the terminal device to a wireless network. For example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle to everything (vehicle to everything, V2X) device), a communication device in device to device (device to device, D2D) communication, or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU. In some deployments of the access network device, the CU may be further divided into a CU-control plane (control plane, CP), a CU-user plane (user plane, UP), and the like. In some other deployments of the access network device, the access network device may alternatively be a radio unit (radio unit, RU), or the like. In still some other deployments of the access network device, the access network device may alternatively be of an open radio access network (open radio access network, ORAN) architecture, or the like. A specific type of the access network device is not limited in this application. For example, when the access network device is of an ORAN architecture, the access network device in embodiments of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

The core network device may include but is not limited to one or more of the following devices or network elements: a user plane function (user plane function, UPF) network element, an application function (application function, AF) network element, an access and mobility management (access and mobility management function, AMF) network element, a session management (session management function, SMF) network element, a policy control function (policy control function, PCF) network element, and the like. The AMF is mainly responsible for mobility management in a mobile network, such as user location update, registration of a user with a network, and user switching. The SMF is mainly responsible for session management in the mobile network, such as session establishment, modification, and release. Specific functions are, for example, allocating an IP address to a user and selecting a UPF that provides a packet forwarding function. The PCF is responsible for providing policies, such as QoS policies or slice selection policies, for the AMF and the SMF. The AF is responsible for providing a service to a network, for example, affecting service routing, interacting with the PCF for policy control, or the like. The UPF is mainly responsible for processing a user packet, for example, forwarding, charging, and the like. The UPF may be further configured to provide mobility during wireless access. In this case, the UPF is also referred to as a protocol data unit session anchor (PDU (protocol data unit) session anchor UPF, PSA UPF).

It should be noted that:
"Sending" and "receiving" in embodiments of this application represent signal transfer directions. For example, "sending configuration information to a terminal device" may be understood as that a destination end of the configuration information is the terminal device, and may include direct sending through an air interface, or indirect sending by another unit or module through an air interface. "Receiving configuration information from a network device" may be understood as that a source end of the configuration information is the network device, and may include directly receiving from the network device through an air interface, or indirect receiving from another unit or module through an air interface. "Sending" may also be understood as "outputting" of a chip interface, and "receiving" may also be understood as "inputting" of the chip interface.

In other words, sending and receiving may be performed between devices, for example, between the network device and the terminal device, or may be performed in a device, where for example, sending or receiving is performed between components, modules, chips, software modules, or hardware modules in a device through a bus, a cable, or an interface.

It may be understood that necessary processing, such as encoding and modulation, may be performed on the information between the source end at which the information is sent and the destination end, but the destination end may understand valid information from the source end. Similar descriptions in this application may be understood similarly, and details are not described again.

In embodiments of this application, an "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.
I. For ease of understanding, the following describes in detail definitions of related terms in this application.

### 1. SEALDD architecture

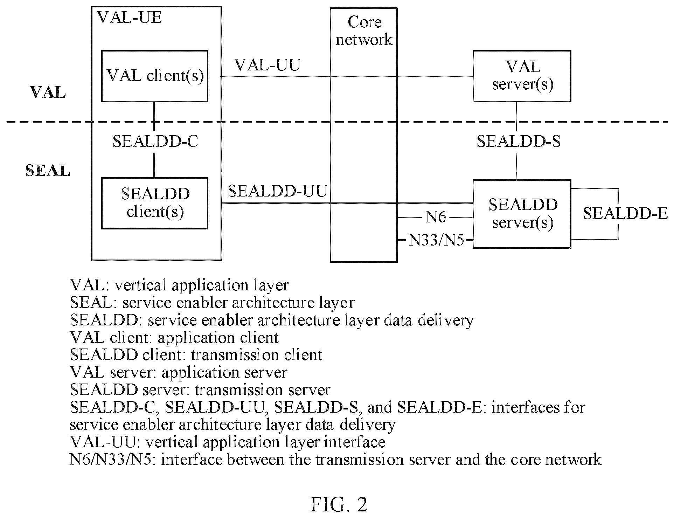

For example, FIG. 2 is a diagram of an SEALDD architecture. The SEALDD architecture (also referred to as an SEALDD enhancement layer or a data transmission enhancement layer) includes an SEALDD client and an SEALDD server. As a part of UE, the SEALDD client runs on the UE in a form of software or a system component. The SEALDD server shown in FIG. 2 may be deployed between a UPF and an application server (application server, AS) or a VAL server. A structure of an interface between modules shown in FIG. 2 includes: A VAL client communicates with the SEALDD client through an SEALDD-C interface, and the VAL server communicates with the SEALDD server through an SEALDD-S interface. The SEALDD client performs user plane data transmission with the SEALDD server through an SEALDD-UU interface. The SEALDD-UU interface is carried on a user plane session constructed by a 3GPP network system. The SEALDD server may perform control plane message communication with a PCF through an N33/N5 interface. For example, the N5 interface is an interface between an AF and the PCF. N33 is an interface between the AF and an NEF. The AF may indirectly communicate with the PCF via the NEF. The SEALDD server may send an AF request to a 5GC or subscribe to a notification from a 5GC. The SEALDD server may further perform user plane data transmission with the UPF through an N6 interface. Interaction between SEALDD servers is performed through an SEALDD-E interface, including control-plane context transmission and user plane data forwarding. It may be understood that the VAL client may be an application client (Application Client, AC) in the UE. The VAL server may be an edge application server (edge application server, EAS) or an AS. It may be further understood that, when the VAL has a capability of supporting an SEALDD service, the SEALDD enhancement layer architecture shown in FIG. 2 is used, so that the VAL can implement functions related to the SEALDD service.

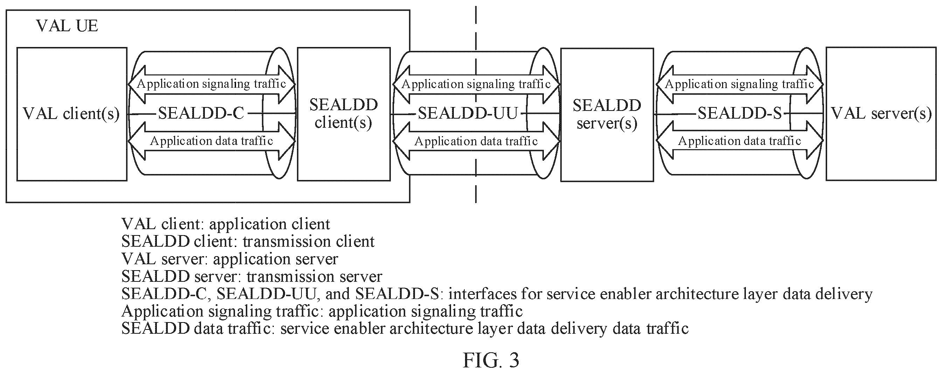

Optionally, as a data transmission enhancement layer, the SEALDD may provide communication connection and data transmission functions (supporting transmission of application/media data and signaling data) for a VAL application. A transmission diagram of the SEALDD is shown in FIG. 3. For example, for transmission of uplink data, the VAL client transmits a data packet to the SEALDD client through the SEALDD-C interface. After encapsulating the data packet, the SEALDD client sends an encapsulated data packet to the SEALDD server through the SEALDD-UU interface. After parsing/decapsulating the data packet, the SEALDD server sends a parsed/decapsulated data packet to the VAL server through the SEALDD-S interface. Transmission of downlink data is similar. The VAL server transmits a data packet to the SEALDD server through the SEALDD-S interface. After encapsulating the data packet, the SEALDD server sends an encapsulated data packet to the SEALDD client through the SEALDD-UU interface. After parsing/decapsulating the data packet, the SEALDD client sends a parsed/decapsulated data packet to the VAL client through the SEALDD-C interface.

It should be noted that, when a data plane and a control plane are not distinguished, the AS and the AF may be interchangeably used or replaced with each other, that is, the AS and the AF may be physically deployed on a same server. Alternatively, when a data plane and a control plane are distinguished, the AS and the AF are configured to perform different functions. For example, an AS in the 5GC may perform user plane data transmission with the UPF through an N6 interface. For another example, an AF in the 5GC may perform control plane message communication with the PCF through an N5 interface or an N33 interface.

### 2. Edge application (edge application, EDGEAPP) architecture

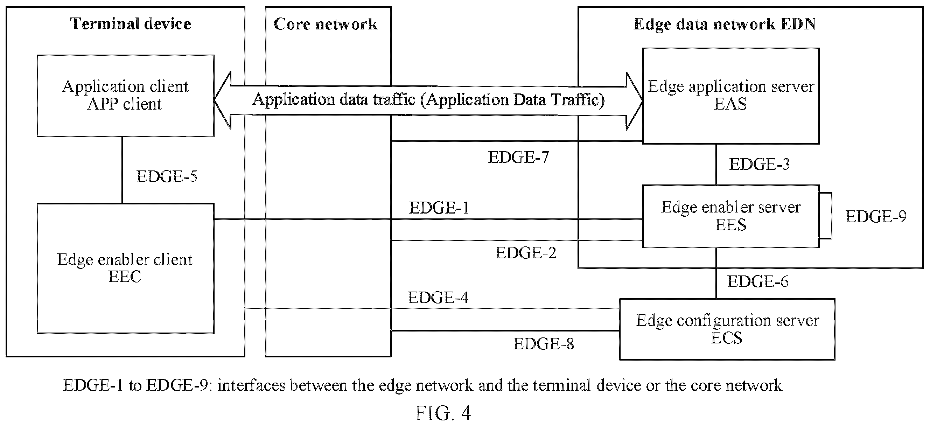

FIG. 4 is a diagram of an EDGEAPP architecture scenario. The EDGEAPP architecture scenario includes a UE side and an edge data network (edge data network, EDN). An AC and an edge enabler client (edge enabler client, EEC) are deployed on the UE side. An edge enabler server (edge enabler server, EES) and an EAS are deployed on an EDN side.

In one understanding of an EDN, the EDN corresponds to one data network, is a special local data network (local DN), includes an edge enabler function, may be identified by using a data network access identifier (Data Network Access Identifier, DNAI) and a data network name (data network name, DNN), and is a network logical concept. In another understanding of an EDN, the EDN is a peer concept of a central cloud, may be understood as a local data center (a geographical location concept), may be identified by using a DNAI, and may include a plurality of local data networks.

The EAS is for providing edge services. Specifically, the EAS registers to the EES, and the EEC on the UE may discover the EAS via the EES. The EES registers information about the EES in the ECS. The EEC on the UE may query the ECS for available information about the EES and establish a connection to the EES. Further, the EEC obtains EAS-related information via the EES, and provides corresponding EAS information for the AC. In this way, the AC is enabled to use an edge service via the EAS. It may be understood that servers or clients shown in FIG. 4 may interact with each other through different interfaces (for example, interfaces EDGE-1 to EDGE-9). Optionally, an application deployed in the edge data network is referred to as an application instance (instance). The application instance is specifically an instance of a server application (for example, social media software, AR, or VR) deployed and run on the EDN. One or more EASs may be deployed for one application in one or more EDNs. EASs deployed and running in different EDNs may be considered as different EASs of one application. The EASs may share one domain name, and may use one IP address or different IP addresses. The EAS may also be referred to as an edge application (server), an application instance, an edge application instance, an MEC application (server), an EAS function, or the like.

The application client AC is a peer entity of the edge application on the UE side. The AC is used by an application user (user) to obtain an application service from an application server. The AC is a client program of an application on the terminal side. The AC may be connected to an application server on a cloud to obtain an application service, or may be connected to an EAS deployed and running in one or more EDNs to obtain an application service.

The edge enabler server EES can provide an enabler capability for the application instance deployed in the EDN, and better support deployment of an application in MEC. For example, the EES can support registration of the edge application, support authentication and authorization for UE, provide IP address information of the application instance for the UE, and the like. The EES can further support obtaining an identifier and the IP address information of the application instance, and further send the identifier and the IP address information of the application instance to an edge data network configuration server. The EES is deployed in the EDN. Generally, the EAS registers to one EES, or information about one EAS is configured on one EES via a management system. The EES is referred to as an EES associated with the EAS. The EES controls/manages the EAS that registers to/is configured in the EES.

The EEC is a peer entity of the EES on the UE side. The EEC is configured to: register information about the EEC and information about the application client with the EES, perform security authentication and authorization, obtain an IP address of the EAS from the EES, and provide an edge computing enabler capability for the application client. For example, the EEC uses an EAS discovery service to return the IP address of the EAS to the application client.

The ECS is responsible for configuration of the EDN, for example, providing the information about the EES for the UE. Alternatively, the ECS may directly provide information about the application instance for the UE, and interact with a DNS of the application to obtain the information about the application instance. Optionally, the ECS may further obtain the information about the application instance and information about an IP address from another functional entityfunctional entity and store the information.

An application user signs a service agreement with an application provider, to provide services for the application user. The application user logs in to an application client AC on a terminal, and performs communication over a connection between the application client AC and the edge application EAS. The edge enabler client EEC is a middleware layer, and is generally located in an operating system, or located between the application client and the operating system. The application client AC may obtain an edge enabler service from the edge enabler client EEC through an application programming interface (application programming interface, API).

### 3. EAS discovery

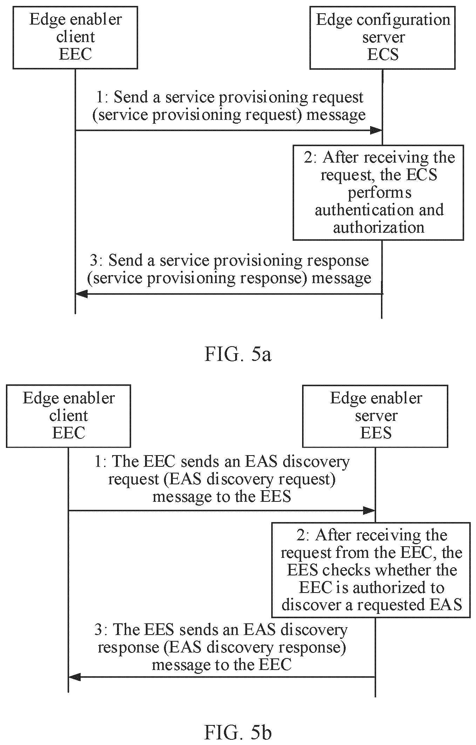

Currently, a two-level discovery mechanism for an EAS is designed and used in a protocol standard. For example, an EEC first discovers an EES platform via an ECS. This corresponds to a service provisioning procedure. Then, the EEC discovers, from the EES platform, the application instance EAS and an address corresponding to the EAS. This corresponds to an EAS discovery procedure.
(1) For example, a service provisioning procedure is shown in FIG. 5a. The procedure includes the following prerequisites: The ECS configures the EEC with information about an available edge computing service based on a UE location, a service requirement, a service preference, and connectivity, where the information is used by the EEC to discover an available EES. Specifically, the procedure may include the following steps.

Step 1: The EEC sends a service provisioning request (service provisioning request) message to the ECS, where the request message includes a UE identifier, for example, a generic public subscription identifier (generic public subscription identifier, GPSI), connectivity information, a UE location, AC profile information, and the like.

Step 2: After receiving the request message, the ECS performs authentication and authorization. For example, the ECS matches, based on an AC profile (profile) and UE location information provided by the EEC, an EES that registers to the ECS. If the ECS successfully processes a service provisioning request, EEC information can be determined. If the ECS cannot determine EEC information based on the request message of the EEC and the like, the ECS needs to reject the service provisioning request and respond with a failure cause.

Step 3: If successfully processing the service provisioning request, the ECS sends a service provisioning response (service provisioning response) message to the EEC. The response message includes EDN connection information provided by the ECS, a list of EESs that satisfy the request information of the EEC, address identifier information of the EES, and the like.

(2) For example, an EAS discovery procedure is shown in FIG. 5b. The procedure includes the following prerequisites: The EEC receives information about the EES, for example, receives a uniform resource locator (uniform resource locator, URL) and an IP address; and the EES is configured with an EAS discovery policy of an edge computing service provider (edge computing service provider, ECSP). Specifically, the procedure may include the following steps.

Step 1: The EEC sends an EAS discovery request (EAS discovery request) message to the EES. The EAS discovery request message includes an EEC ID along with a security credential, and may further include an EAS discovery filter (filter) to retrieve information about a particular EAS or a particular category of EASs (for example, gaming applications). For example, information included in the EAS discovery request message may be shown in Table 1.

**Table 1: EAS discovery request message**

| Information element | Status | Description |
|---|---|---|
| Requestor identifier | Mandatory M | Indicates an identifier of a requestor (for example, the EEC ID) |
| UE identifier | Optional O | Indicates an identifier of UE (for example, the GPSI or an identity token) |
| Security credential | M | Indicates a security credential resulting from successful authorization for an edge computing service |
| EAS discovery filter | O | Indicates a set of characteristics for determining a needed EAS |

For another example, information included in the EAS discovery filter may be shown in Table 2.

**Table 2: EAS discovery filter**

| Information element | Status | Description |
|---|---|---|
| List of AC characteristics | O | Describes an AC for which a matching EAS is needed |
| > AC profile (NOTE 2) | M | Indicates an AC profile including parameters for determining the matching EAS |
| List of EAS characteristics | O | Describes a characteristic of a needed EAS |
| > EAS ID | O | Indicates an identifier of the needed EAS |
| > EAS provider identifier | O | Indicates an identifier of a needed EAS provider |
| > EAS Type | O | Indicates a category or type of needed EASs (for example, V2X) |
| > EAS schedule (EAS schedule) | O | Indicates a required availability schedule of the EAS (for example, a time window) |
| > EAS geographical service area | O | Indicates a location (for example, a geographical area or a route) in which an EAS service is available |
| > EAS topological service area | O | Indicates a topological area (for example, a cell ID or a TAI) for which the EAS service is available |
| > Service continuity support | O | Indicates whether the service continuity support is needed |
| > EAS status | O | Indicates the EAS status (for example, enabled or disabled) |
| > Service permission level | O | Indicates a needed level of a service permission |
| > Service characteristic | O | Indicates a needed service function |

Step 2: After receiving the request from the EEC, the EES checks whether the EEC is authorized to discover a requested EAS. For example, the EES identifies the EAS based on the EAS discovery filter and the UE location (which may be obtained from a 3GPP core network). Optionally, if the EEC does not provide the EAS discovery filter, the EES may identify the EAS based on UE-specific service information at the EES and the UE location, or the EES identifies the EAS by applying an ECSP policy (for example, based only on the UE location). Optionally, if the EES cannot determine EAS information by using an input in the EAS discovery request, the UE-specific service information at the EES, or the ECSP policy, the EES needs to reject the service provisioning request and respond with a corresponding failure cause.

Step 3: If the request is processed successfully, the EES sends an EAS discovery response (EAS discovery response) message to the EEC, where the EAS discovery response message includes information about a discovered EAS, endpoint information, and the like, as shown in Table 3.

**Table 3: EAS discovery response message**

| Information element | Status | Description |
|---|---|---|
| Successful response | O | Indicates that the EAS discovery request is successful |
| > Discovered EAS list | O | Indicates a list of discovered EASs |
| >> EAS profile | M | Indicates a profile of the EAS |
| >> Lifetime | O | Indicates a time interval or duration during which an information element in the EAS profile is valid and supposed to be cached in the EEC (for example, a time-to-live value for an EAS endpoint) |
| Failure response | O | Indicates that the EAS discovery request fails |
| > Cause | O | Indicates a cause of an EAS discovery request failure |

After receiving the EAS discovery response, the EEC uses, based on a requirement, the endpoint information to route application data traffic to the EAS.

### 4. SEALDD server discovery

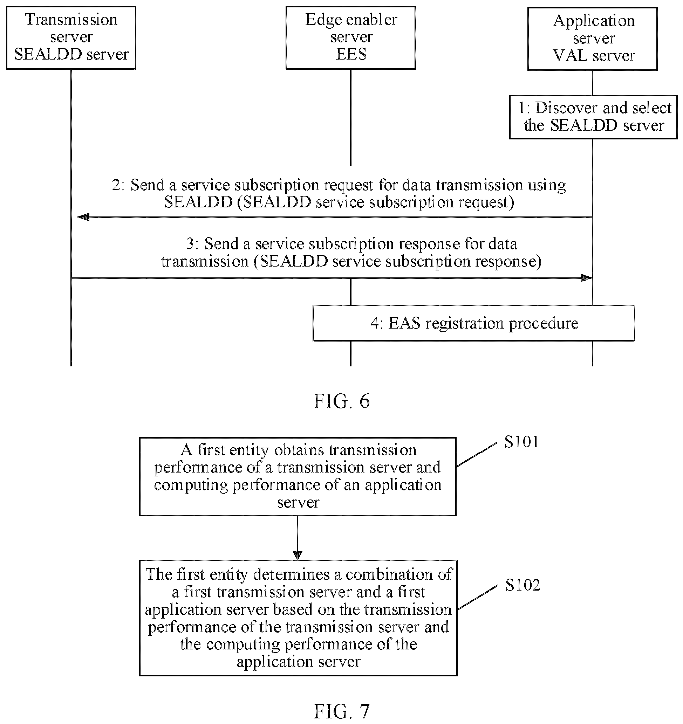

Currently, for the SEALDD server discovery, a common application programming interface framework (common application programming interface framework, CAPIF) mechanism and an EDGEAPP mechanism are comprehensively used, to provide a manner of determining an SEALDD server and a VAL server on a server side. For example, FIG. 6 is a diagram of a procedure in which a VAL server and an SEALDD server associated with the VAL server are determined on a server side. The procedure includes the following steps.

Step 1: The VAL server discovers and selects an SEALDD server via a CAPIF mechanism. For example, the VAL server, as an API invoking entity, sends an API discovery request to a CAPIF core function CCF entity. The CCF sends an API discovery response to the API invoking entity, where the response message includes discovered API list information (such as an API name, an API type, or API interface information). The API interface information may be used as address information of the SEALDD server, so that the VAL server discovers and selects the SEALDD server.

Step 2: The VAL server sends, to the SEALDD server selected by the VAL server, a service subscription request for data transmission using SEALDD (SEALDD service subscription request).

Step 3: The SEALDD server authorizes the service request of the VAL server, and sends a service subscription response for data transmission (SEALDD service subscription response).

Step 4: The VAL server may be considered as an EAS. For example, similar to an EAS registration procedure, the VAL server and the SEALDD server (discovered in step 1) associated with the VAL server register to an EES.

Optionally, after step 4, the EEC may discover, by using the EAS discovery procedure in Section 3, the VAL server and the SEALDD server corresponding to the VAL server.

### II. Communication method provided in this application

FIG. 7 is a schematic flowchart of a communication method according to this application. The communication method is applied to the communication system shown in FIG. 1. For example, the communication method may be performed by a first entity. Optionally, the first entity may be an EES or an EEC. The communication method includes the following steps.

S101: The first entity obtains transmission performance of a transmission server and computing performance of an application server.

Transmission performance (also referred to as a transmission resource, transmission quality, communication quality, transmission path performance, or the like) of the transmission server may be represented in a plurality of manners.

Representation manner 1: The transmission performance of the transmission server may be determined by the transmission server based on an end-to-end transmission quality measurement result obtained through local measurement. The transmission quality measurement result includes transmission quality of a path between the transmission server and a terminal device, for example, includes transmission quality of a path of UE/SEALDD client-RAN-UPF-SEALDD server. Specifically, the measurement result may be at an application granularity (for example, a VAL application granularity (per VAL application)), or an application and UE location area granularity (for example, per VAL application and per UE location area). For example, the transmission server may generate transmission performance such as a latency or a statistical value of a latency and a transmission rate or a statistical value of a transmission rate based on measurement results obtained through local measurement such as an end-to-end transmission latency and a transmission rate. For another example, the transmission performance of the transmission server may be directly represented by the transmission quality measurement result.

Representation manner 2: The transmission performance of the transmission server may be determined by a second entity. The second entity may collect and analyze the transmission performance of the transmission server. For example, the transmission performance of the transmission server obtained by the second entity may be a statistical value or a prediction value. The second entity is configured to perform data collection and intelligent analysis. For example, the second entity may be a functional entity like an application data analytics enabler server (application data analytics enabler server, ADAES), or a network data analytics function (network data analytics function, NWDAF).

Representation manner 3: The transmission performance of the transmission server may be determined by the transmission server based on deployment location information of the transmission server. The deployment location information of the transmission server may include but is not limited to a location area in which the transmission server is located, a DNAI, and the like. It may be understood that a distance between the location area in which the transmission server is located and the application server and/or the first entity may affect the transmission performance of the transmission server. Optionally, the transmission performance of the transmission server may be represented by the deployment location information.

The computing performance (also referred to as a computing resource status, a computing power resource status, or the like) of the application server may be represented in a plurality of manners.

Representation manner 4: The computing performance of the application server may be determined by the application server based on a load status obtained through local measurement. For example, when load of the application server is light, it indicates that the application server has a large quantity of available computing power resources, and the computing performance of the application server is high. When load of the application server is heavy, it indicates that the application server has a small quantity of available computing power resources, and the computing performance of the application server is low. Optionally, the computing performance of the application server may be a computing processing capability of the server. For example, the computing capability of the application server includes a processor capability of image or video rendering in image processing. Optionally, the computing performance of the application server may be directly represented by the load status of the application server.

Representation manner 5: The computing performance of the application server may be determined by the second entity. The second entity may collect and analyze the computing performance of the application server. The computing performance of the application server obtained by the second entity may be a statistical value or a prediction value. For example, the second entity may collect and analyze load information of the application server, to obtain a statistical value or a prediction value of load of the application server.

In a possible implementation, when the first entity is an EES, S101 includes but is not limited to the following several obtaining manners.

Obtaining manner 1: The first entity receives the transmission performance of the one or more transmission servers, and receives the computing performance of the one or more application servers.

For example, the EES receives the statistical value or the prediction value of the transmission performance reported by the SEALDD server, and receives the load information of the server reported by the VAL server.

Obtaining manner 2: The first entity obtains the transmission performance of the transmission server from the second entity based on identification information and/or address information of the transmission server, and obtains the computing performance of the application server from the second entity based on identification information and/or address information of the application server.

For example, the EES receives the identification information and/or address information of the SEALDD server reported by the SEALDD server, and obtains the transmission performance (for example, statistical values or prediction values of the latency and the transmission rate) of the SEALDD server from the second entity based on the identification information and/or address information of the SEALDD server. The identification information of the SEALDD server may include but is not limited to an identifier of the SEALDD server (for example, an SEALDD server ID), or other information that may indicate the SEALDD server. The address (address) information of the SEALDD server may include but is not limited to a network address like an IP address of the SEALDD server, location information of the SEALDD server (for example, geographical location information or network topology location information of the SEALDD server, for example, the DNAI), and the like.

In addition, for example, the EES receives the identification information and/or address information of the VAL server reported by the VAL server, and obtains the computing performance (for example, the statistical value or the prediction value of the load status) of the VAL server from the second entity based on the identification information and/or address information of the VAL server. The identification information of the VAL server may include but is not limited to an identifier of the VAL server (for example, a VAL server ID), or other information that may indicate the VAL server. The address information of the VAL server may include but is not limited to a network address like an IP address of the VAL server, location information of the VAL server (for example, geographical location information or network topology location information of the VAL server, for example, a DNAI), and the like.

Obtaining manner 3: The first entity receives deployment location information of the one or more transmission servers.

For example, the EES receives the deployment location information (for example, the DNAI) of the SEALDD server reported by the SEALDD server. The first entity may determine the transmission performance of the SEALDD server based on the deployment location information of the SEALDD server (for example, if the SEALDD server is close to the VAL server, it may be considered as that the transmission performance of the SEALDD server is high).

Obtaining manner 4: The first entity receives the transmission performance of the corresponding transmission server. The first entity obtains information about a second enabler server corresponding to the application server, and obtains the computing performance of the application server from the second enabler server.

For example, when the transmission server and the application server are deployed in or register to different EESs, if the first entity is a first EES in which the transmission server is deployed or to which the transmission server registers, the first EES receives the transmission performance of the SEALDD server reported by the SEALDD server. The first EES may further receive identification information of the VAL server, and obtain, based on the identification information of the VAL server, the computing performance of the VAL server from a second EES in which the VAL server is deployed or to which the VAL server registers.

Obtaining manner 5: The first entity receives the computing performance of the corresponding application server. The first entity obtains information about a first enabler server corresponding to the transmission server, and obtains the transmission performance of the transmission server from the first enabler server.

For example, when the transmission server and the application server are deployed in or register to different EESs, if the first entity is a second EES in which the application server is deployed or to which the application server registers, the second EES receives the computing performance of the VAL server reported by the VAL server. The second EES may further receive identification information of the SEALDD server, and obtain, based on the identification information of the SEALDD server, the transmission performance of the SEALDD server from a first EES in which the SEALDD server is deployed or to which the SEALDD server registers.

Obtaining manner 6: The first entity receives the computing performance of the application server and the transmission performance of the transmission server, or receives comprehensive information of the computing performance of the application server and the transmission performance of the transmission server. The comprehensive information is determined by the corresponding application server or the corresponding transmission server based on the transmission performance of the transmission server and the computing performance of the application server.

For example, the EES receives the transmission performance reported by the SEALDD server, and receives the computing performance of the VAL server reported by the VAL server. Further, the EES may perform comprehensive computing processing on the transmission performance and the computing performance, to obtain the comprehensive information of the computing performance of the application server and the transmission performance of the transmission server. For example, the EES may sum up or weight the latency and the transmission rate of the transmission server and the load of the application server, to obtain the comprehensive information of the computing performance of the application server and the transmission performance of the transmission server.

For another example, the EES receives the comprehensive information, reported by the SEALDD server or the VAL server, of the computing performance of the application server and the transmission performance of the transmission server. In other words, the SEALDD server or the VAL server may collect the computing performance of the application server and the transmission performance of the transmission server, and perform comprehensive computing processing on the transmission performance and the computing performance, to obtain the comprehensive information of the computing performance of the application server and the transmission performance of the transmission server. For example, the SEALDD server or the VAL server may sum up or weight the latency and the transmission rate of the transmission server and the load of the application server, to obtain the comprehensive information of the computing performance of the application server and the transmission performance of the transmission server, and send the comprehensive information of the computing performance of the application server and the transmission performance of the transmission server to the EES.

In another possible implementation, when the first entity is an EEC, S101 includes but is not limited to the following several obtaining manners.

Obtaining manner 7: The first entity sends a first request message. The first request message includes identification information of the transmission server and identification information of the application server. The first entity receives a first response message. The first response message includes the transmission performance of the transmission server and the computing performance of the application server.

For example, the EEC sends the first request message to an EES, to request to obtain the transmission performance of the transmission server and the computing performance of the application server. Correspondingly, the EES sends the first response message to the EEC. The first response message includes the transmission performance of the transmission server and the computing performance of the application server. It may be understood that, in Obtaining manner 7, the EES has obtained the transmission performance of the transmission server and the computing performance of the application server. A manner in which the EES performs the obtaining may be any one of Obtaining manner 1 to Obtaining manner 5. Details are not described herein again.

Obtaining manner 8: The first entity obtains information about a first enabler server corresponding to the transmission server and information about a second enabler server corresponding to the application server. The first entity obtains the transmission performance of the transmission server from the first enabler server, and obtains the computing performance of the application server from the second enabler server.

For example, when the transmission server and the application server are deployed in or register to different EESs, the EEC determines, based on an identification message and/or address information of the transmission server, a first EES corresponding to the transmission server (namely, an EES in which the transmission server is deployed or to which the transmission server registers). The EEC sends a second request message to the first EES, to request to obtain the transmission performance of the transmission server. Correspondingly, the first EES sends a second response message to the EEC. The second response message includes the transmission performance of the transmission server. Similarly, the EEC determines, based on identification information and/or address information of the application server, a second EES corresponding to the application server (namely, an EES in which the application server is deployed or to which the application server registers). The EEC sends a third request message to the second EES, to request to obtain the computing performance of the application server. Correspondingly, the second EES sends a third response message to the EEC. The third response message includes the computing performance of the application server.

Optionally, when the first entity is an EEC, the EEC may also use Obtaining manner 6 described above. To be specific, the EEC receives the computing performance of the application server and the transmission performance of the transmission server, or receives comprehensive information of the computing performance of the application server and the transmission performance of the transmission server. For example, the EEC receives a message from an EES. The message includes the transmission performance reported by the SEALDD server and the computing performance reported by the VAL server, or the message includes the comprehensive information of the transmission performance of the SEALDD server and the computing performance of the VAL server.

S102: The first entity determines a combination of a first transmission server and a first application server based on the transmission performance of the transmission server and the computing performance of the application server.

The combination of the first transmission server and the first application server means that an application client uses the first transmission server to enable data transmission of the first application server. To be specific, a connection between the application client and the VAL server via the SEALDD server may be implemented by using the combination of the first transmission server and the first application server. This helps the SEALDD server and VAL server jointly satisfy a performance requirement of a VAL application.

In a possible implementation, the first entity determines the combination of the first transmission server and the first application server based on whether the application server supports transmission server-enabled transmission, an application type supported by the transmission server, the transmission performance of the transmission server, and the computing performance of the application server. Specifically, this includes but is not limited to the following several cases.

Case 1: If there is a transmission server supporting an application type in a plurality of transmission servers that have performed registration, and an application server of the application type supports transmission server-enabled transmission, the first entity determines a combination that is of a first transmission server and a first application server and that satisfies an application performance requirement, or determines a combination of a first transmission server and a first application server in which the transmission performance of the transmission server and the computing performance of the application server are comprehensively optimal.

For example, if the EES has an SEALDD server supporting the VAL application, and a corresponding VAL server supports performing transmission via the SEALDD server, the EES select a first SEALDD server and a first VAL server by combining consideration the transmission performance of the SEALDD server and computing performance of the VAL server, to. For example, the EES may select, depending on whether a sum of the transmission performance (for example, a transmission latency) of the SEALDD server and the computing performance (for example, a computing latency) of the VAL server satisfies an AC application performance requirement (for example, a needed end-to-end latency (response time) in application performance needed by the AC (AC service KPI)), a corresponding SEALDD server and a corresponding VAL server. Alternatively, the EES may select, based on a sum of the transmission performance (for example, a transmission latency) of the SEALDD server and the computing performance (a computing latency) of the VAL server, an SEALDD server and a VAL server that correspond to an optimal sum of the transmission performance and the computing performance. It should be noted that combining the transmission performance of the SEALDD server and the computing performance of the VAL server by the EES may be summing up performance, weighting performance, or performing level classification on performance. This is not limited in this application. For example, the EES may determine performance levels, for example, a level 1, a level 2, and a level 3, based on qualitative performance (for example, the deployment location information of the one or more transmission servers). Different levels correspond to different deployment location information. It is assumed that a higher level indicates better comprehensive performance.

Case 2: If there is no transmission server supporting an application type in a plurality of transmission servers that have performed registration, and/or an application server of the application type does not support transmission server-enabled transmission, the first entity determines the first application server, or sends fourth indication information to the application client. The fourth indication information indicates that selecting the combination of both the transmission server and the application server is not supported.

For example, if the EES has no SEALDD server supporting the VAL application, or the VAL application does not support enabling transmission by the SEALDD server, the EES may select a VAL server by using an EAS discovery procedure, or feed back, to the AC, that selecting both of the SEALDD server and the VAL server is not supported currently (for example, the EES sends a server discovery failure message to the AC, where the message indicates that selecting both the SEALDD server and the VAL server is not supported currently) is not supported.

In this embodiment, the first entity may comprehensively consider the transmission performance provided by the transmission server and the computing performance provided by the application server, to select the combination of the transmission server and the application server. This helps satisfy an application requirement and/or provide optimal transmission performance and computing performance.

III. The following describes in detail a specific procedure in which the communication method described above is applied to a specific network scenario.

For example, the specific network scenario is shown in FIG. 1, including an AC, an EEC, an ECS, an EES, an SEALDD server and a VAL server. The communication method is implemented through interaction between the foregoing one or more entities.

Example 1: In a scenario in which a VAL server and an SEALDD server are deployed in or register to a same EES, the EES determines a combination of an SEALDD server and a VAL server based on transmission performance of the SEALDD server and computing performance of the VAL server.

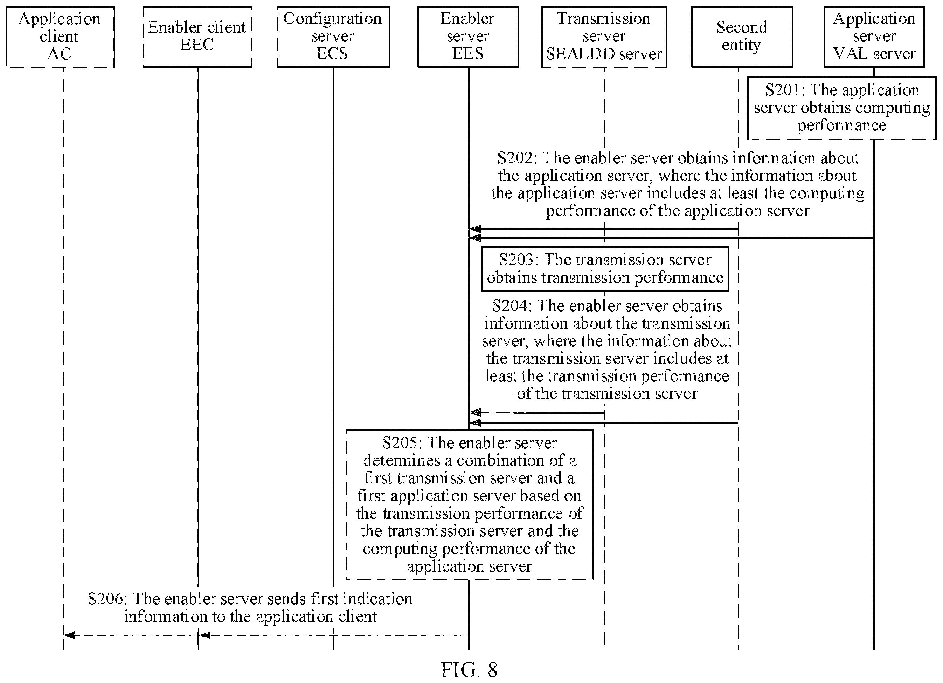

For example, FIG. 8 is a schematic flowchart in which an enabler server determines a combination of a first transmission server and a first application server based on transmission performance of a transmission server and computing performance of an application server according to this application. The following steps are included.

S201: The application server obtains the computing performance.

For a specific implementation of S201, refer to Representation manner 4 and Representation manner 5 described in S101. For example, the computing performance of the application server may be determined by the application server based on a load status obtained through local measurement. In other words, the application server directly uses the load status as the computing performance of the application server. For another example, the computing performance of the application server may be determined by a second entity. The second entity may collect and analyze the computing performance of the application server. The application server may obtain, from the second entity, the computing performance of the application server obtained by the second entity through analysis.

S202: The enabler server obtains information about the application server, where the information about the application server includes at least the computing performance of the application server.

For example, the information about the application server may include but is not limited to an identifier of the application server (for example, a VAL server ID), an identifier of an application service (for example, a VAL service ID), address information of the application server (for example, a network address like an IP address of the VAL server), and the computing performance of the application server (for example, load of the VAL server), second indication information, and the like. The second indication information indicates whether the application server supports transmission server-enabled transmission. For example, whether the VAL server supports enabling transmission by the SEALDD server specifically means whether the VAL server supports performing transmission via the SEALDD server. The second indication information is used by the enabler server to determine whether to select the VAL server (to be specific, that the SEALDD server enables transmission is not supported, and the VAL server is selected) or select the combination of the VAL server and the SEALDD server (to be specific, that the SEALDD server enables transmission is supported, and the VAL server and the corresponding SEALDD server need to be selected).

For example, that the enabler server obtains information about the application server may be that the VAL server reports the computing performance of the VAL server to an EES (in other words, the EES receives the computing performance from the VAL server) or an EES obtains the computing performance of the VAL server from the VAL server. Alternatively, the VAL server obtains the computing performance of the VAL server from the second entity, and then reports the computing performance to the EES. Alternatively, the VAL server provides the information about the VAL server (for example, the identifier and an address of the VAL server) for the EES, and the EES obtains the computing performance (for example, a statistical value or a prediction value of the load) of the VAL server from the second entity. For specific implementations of the foregoing examples, refer to corresponding descriptions in Obtaining manner 1 and Obtaining manner 2. Details are not described herein again.

Optionally, a bearer message of S203 is not limited in this application. For example, that the enabler server obtains information about the application server may be that the VAL server sends a registration request message, a registration update request message, or the like to the EES, where the registration request message or the registration update request message carries at least the computing performance of the application server.

S203: The transmission server obtains the transmission performance.

For a specific implementation of S203, refer to Representation manner 1 to Representation manner 3 described in S101. For example, the transmission performance of the transmission server may be determined by the transmission server based on an end-to-end transmission quality measurement result obtained through local measurement. In other words, the transmission server directly uses the transmission quality measurement result as the transmission performance of the transmission server. For another example, the transmission performance of the transmission server may be determined by the second entity. The second entity may collect and analyze the transmission performance of the transmission server. In this case, the transmission server may obtain the transmission performance from the second entity. For another example, the transmission performance of the transmission server may be determined by the transmission server based on deployment location information of the transmission server.

S204: The enabler server obtains information about the transmission server, where the information about the transmission server includes at least the transmission performance of the transmission server.

For example, the information about the transmission server may include but is not limited to an identifier of the transmission server (for example, an SEALDD server ID), address information of the transmission server (for example, a network address like an IP address of the SEALDD server), and the transmission performance of the transmission server (such as a latency and a transmission rate of the SEALDD server), an application type supported by the transmission server (for example, the application type may be the identifier of the application server), the deployment location information (for example, a DNAI) of the transmission server, and the like. The application type supported by the transmission server is used by the enabler server to determine whether the SEALDD server supports a corresponding VAL server or VAL application for data transmission.

For example, that the enabler server obtains information about the transmission server may be that the SEALDD server reports the transmission performance of the SEALDD server to an EES (in other words, the EES receives the transmission performance from the SEALDD server) or an EES obtains the transmission performance from the SEALDD server. Alternatively, the SEALDD server obtains the transmission performance of the SEALDD server from the second entity, and then reports the transmission performance to the EES. Alternatively, the SEALDD server provides the information about the SEALDD server (for example, the identifier and an address of the SEALDD server) for the EES, and the EES obtains the transmission performance of the SEALDD server from the second entity. It may be understood that the transmission performance of the SEALDD server in the foregoing information may be considered as explicit information. Optionally, the SEALDD server provides the deployment location information of the SEALDD server for the EES, or the EES obtains deployment location information of the SEALDD server from the SEALDD server. In this case, the transmission performance of the SEALDD server in the information may be considered as implicit information (in other words, the EES may indirectly obtain the transmission performance by using the deployment location information of the SEALDD server). For specific implementations of the foregoing examples, refer to corresponding descriptions in Obtaining manner 1 to Obtaining manner 3. Details are not described herein again.

Optionally, a bearer message of S203 is not limited in this application. For example, that the enabler server obtains information about the transmission server may be that the SEALDD server sends a registration request message, a registration update request message, or the like to the EES, where the registration request message or the registration update request message carries at least the transmission performance of the transmission server.

Optionally, a sequence of performing S201 and S203 and a sequence of performing S202 and S204 are not limited in this application. For example, the EES may first obtain the computing performance of the application server, and then obtain the transmission performance of the transmission server. Alternatively, the EES first obtains the transmission performance of the transmission server, and then obtains the computing performance of the application server. Alternatively, the EES obtains the computing performance of the application server and the transmission performance of the transmission server at the same time. An execution sequence in the figure is merely an example.

S205: The enabler server determines the combination of the first transmission server and the first application server based on the transmission performance of the transmission server and the computing performance of the application server.

For a specific implementation of S205, refer to steps performed by the first entity in S102. Details are not described herein again.

Optionally, an EAS discovery procedure may be further included between S204 and S205. For example, an AC sends a server discovery request message to an EEC, where the request message includes an AC ID, the VAL server ID, the SEALDD server ID, an AC service KPI, and the like. The EEC sends a service provisioning request to an ECS, where the request message includes an EEC ID, the VAL server ID, the SEALDD server ID, a UE location, and the like. The ECS discovers the EES based on the VAL server ID and the SEALDD server ID, and feeds back a response message, where the response message includes the VAL server ID, the SEALDD server ID, the corresponding EES, and the like. The EEC sends a server discovery request message to the EES, where the request message includes the EEC ID, the VAL server ID, the SEALDD server ID, the AC service KPI, and the like.

Optionally, after S205, the method further includes the following step.

S206: The enabler server sends first indication information to the application client, where the first indication information indicates the application client to use the first transmission server to enable data transmission of the first application server.

For example, if the application client is an AC, the EES sends the first indication information to the EEC, and then the EEC sends the first indication information to the AC, where the first indication information indicates the application client to use the first transmission server to enable the data transmission of the first application server, and indicates that a VAL client is connected to an SEALDD client, the SEALDD client is connected to the SEALDD server, and then, the SEALDD server is connected to the VAL server. In other words, the VAL client is not separately connected to the SEALDD server and the VAL server.

Optionally, a bearer message of S206 is not limited in this application. For example, that the enabler server sends first indication information to the application client may be that the EES sends a server discovery response message to the EEC, and then the EEC sends an AC server discovery response message to the AC, where the AC server discovery response message includes the address information of the SEALDD server, the address information of the VAL server, the first indication information, and the like.

Example 2: In a scenario in which a VAL server and an SEALDD server are deployed in or register to a same EES, an EEC determines a combination of an SEALDD server and a VAL server based on transmission performance of the SEALDD server and computing performance of the VAL server.

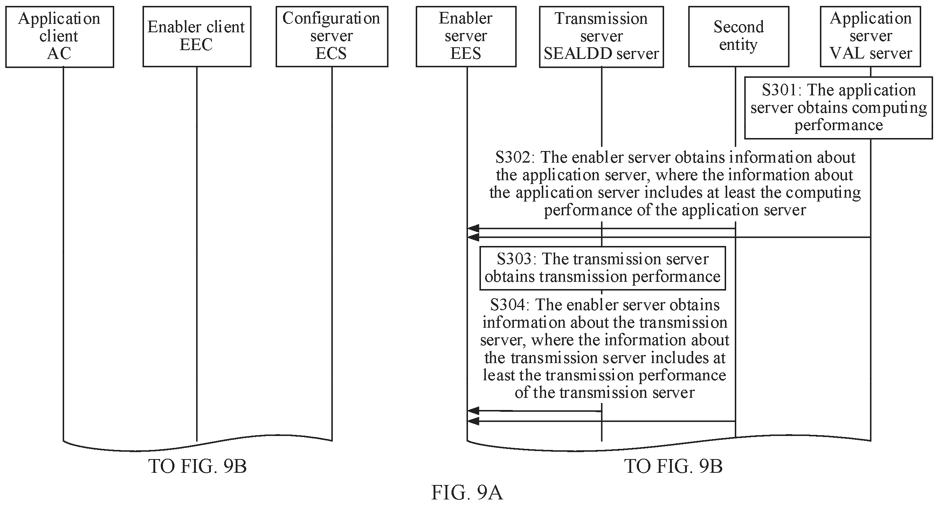

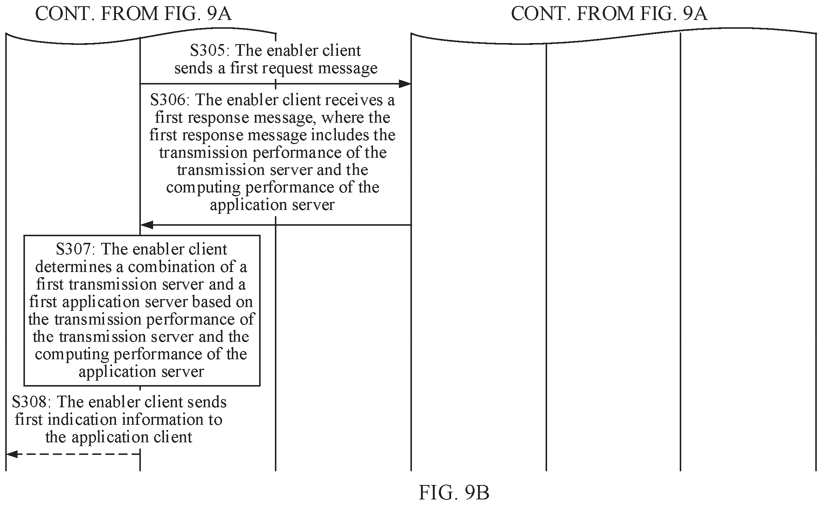

For example, FIG. 9A and FIG. 9B are a schematic flowchart in which an enabler client determines a combination of a first transmission server and a first application server based on transmission performance of a transmission server and computing performance of an application server according to this application. The following steps are included.

S301: The application server obtains the computing performance.

S302: An enabler server obtains information about the application server, where the information about the application server includes at least the computing performance of the application server.

S303: The transmission server obtains the transmission performance.

S304: The enabler server obtains information about the transmission server, where the information about the transmission server includes at least the transmission performance of the transmission server.

For specific implementations of S301 to S304, refer to corresponding descriptions in S201 to S204. Details are not described herein again.

S305: The enabler client sends a first request message, where the first request message includes identification information of the transmission server and identification information of the application server.

For example, an EEC sends the first request message to an EES, where the message is for requesting to obtain the information about the transmission server (for example, the transmission performance) and the information about the application server (for example, the computing performance).

Optionally, the first request message in S305 is not limited in this application. For example, the first request message may be a server discovery request message or the like. The server discovery request message includes an AC ID, a VAL server ID, an SEALDD server ID, and the like.

S306: The enabler client receives a first response message, where the first response message includes the transmission performance of the transmission server and the computing performance of the application server.

For example, the EES sends the first response message to the EEC, where the message includes the information about the transmission server (for example, the transmission performance) and the information about the application server (for example, the computing performance).

Optionally, the first response message in S306 is not limited in this application. For example, the first response message may be a server discovery response message or the like. The server discovery response request message includes an ID/address of the VAL server, the computing performance, an ID/address of the SEALDD server, the transmission performance, and the like.

It may be understood that S305 and S306 correspond to Obtaining manner 7 described in S101.

S307: The enabler client determines the combination of the first transmission server and the first application server based on the transmission performance of the transmission server and the computing performance of the application server.

For a specific implementation of S307, refer to steps performed by the first entity in S102. Details are not described herein again.

Optionally, after S307, the following step is further included.

S308: The enabler client sends first indication information to an application client, where the first indication information indicates the application client to use the first transmission server to enable data transmission of the first application server.

For example, if the application client is an AC, the EEC directly sends the first indication information to the AC.

Optionally, a bearer message of S308 is not limited in this application. For example, that the enabler client sends first indication information to an application client may be that the EEC sends an AC server discovery response message to the AC, where the AC server discovery response message includes address information of the SEALDD server, address information of the VAL server, the first indication information, and the like.

In the foregoing Example 1 and Example 2, the VAL server and the SEALDD server are deployed in or register to the same EES. In this case, the EES or the EEC may comprehensively consider the transmission performance provided by the transmission server and the computing performance provided by the application server, to select the combination of the transmission server and the application server. This helps satisfy an application requirement and/or provide optimal transmission performance and computing performance. In addition, the EES or the EEC may further provide indication information indicating to use the SEALDD server to perform transmission, so that the AC may be connected to the VAL server via the SEALDD server, instead of being separately connected to the SEALDD server or the VAL server.

Example 3: In a scenario in which a VAL server and an SEALDD server are deployed in or register to different EESs, an EEC determines a combination of an SEALDD server and a VAL server based on transmission performance of the SEALDD server and computing performance of the VAL server.

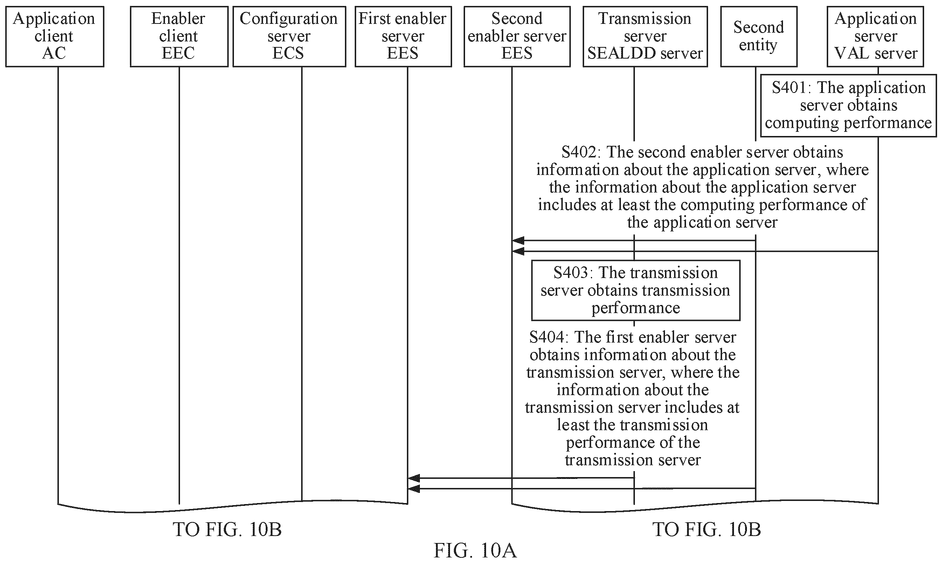

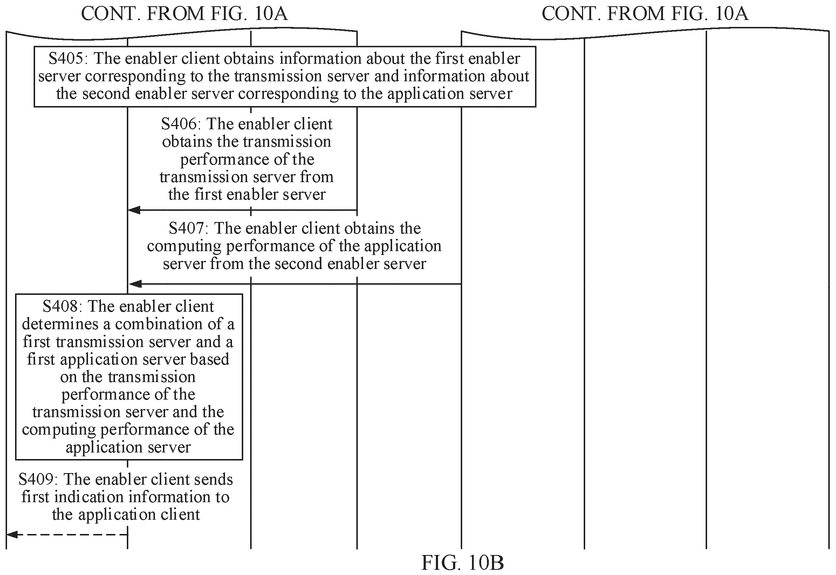

For example, FIG. 10A and FIG. 10B are another schematic flowchart in which an enabler client determines a combination of a first transmission server and a first application server based on transmission performance of a transmission server and computing performance of an application server according to this application. The following steps are included.

S401: The application server obtains the computing performance.

S402: A second enabler server obtains information about the application server, where the information about the application server includes at least the computing performance of the application server.

S403: The transmission server obtains the transmission performance.

S404: A first enabler server obtains information about the transmission server, where the information about the transmission server includes at least the transmission performance of the transmission server.

For specific implementations of S401 to S404, refer to corresponding descriptions in S201 to S204. Details are not described herein again.

S405: The enabler client obtains information about the first enabler server corresponding to the transmission server and information about the second enabler server corresponding to the application server.

For example, an EEC obtains an EES corresponding to each of a VAL server and an SEALDD server by using an EAS discovery procedure. An ECS performs a service provisioning request procedure and an EES discovery procedure. A service provisioning request message includes an EEC ID, a VAL server ID, an SEALDD server ID, a UE location, and the like. The ECS discovers, based on the VAL server ID and the SEALDD server ID, a first EES corresponding to the SEALDD server and a second EES corresponding to the VAL server. The ECS sends a first server discovery request message to the first EES, where the message includes the EEC ID, the SEALDD server ID, an AC service KPI, and the like. The ECS sends a second server discovery request message to the second EES, where the message includes the EEC ID, the VAL server ID, an AC service KPI, and the like.

S406: The enabler client obtains the transmission performance of the transmission server from the first enabler server.

For example, the EEC receives a first server discovery response message from the first EES, where the message includes the information about the SEALDD server (the identifier of the SEALDD server, an address of the SEALDD server, the transmission performance corresponding to the SEALDD server, and the like). Optionally, a bearer message of S406 is not limited in this application. The bearer message of S406 may be a server discovery response message, or may be another message carrying the information about the SEALDD server.

S407: The enabler client obtains the computing performance of the application server from the second enabler server.

For example, the EEC receives a second server discovery response message from the second EES, where the message includes the information about the VAL server (the identifier of the VAL server, an address of the VAL server, the computing performance corresponding to the VAL server, and the like). Optionally, a bearer message of S407 is not limited in this application. The bearer message of S407 may be a server discovery response message, or may be another message carrying the information about the VAL server.

It may be understood that S406 and S407 correspond to Obtaining manner 8 described in S101.

S408: The enabler client determines the combination of the first transmission server and the first application server based on the transmission performance of the transmission server and the computing performance of the application server.

For a specific implementation of S408, refer to steps performed by the first entity in S102. Details are not described herein again.

Optionally, after S408, the following step is further included.

S409: The enabler client sends first indication information to an application client, where the first indication information indicates the application client to use the first transmission server to enable data transmission of the first application server.

For a specific implementation of S409, refer to descriptions in S308. Details are not described herein again.

Example 4: In a scenario in which a VAL server and an SEALDD server are deployed in or register to different EESs, one primary EES in a plurality of EESs determines a combination of an SEALDD server and a VAL server based on transmission performance of the SEALDD server and computing performance of the VAL server. Optionally, some steps in this example may include two optional implementations based on that an entity that performs selection is a first EES corresponding to the SEALDD server and an entity that performs selection is a second EES corresponding to the VAL server.

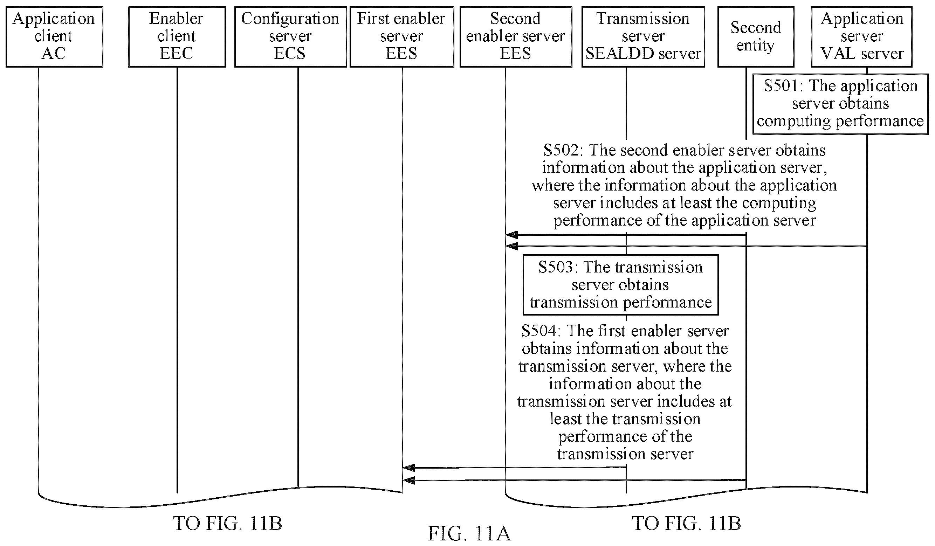

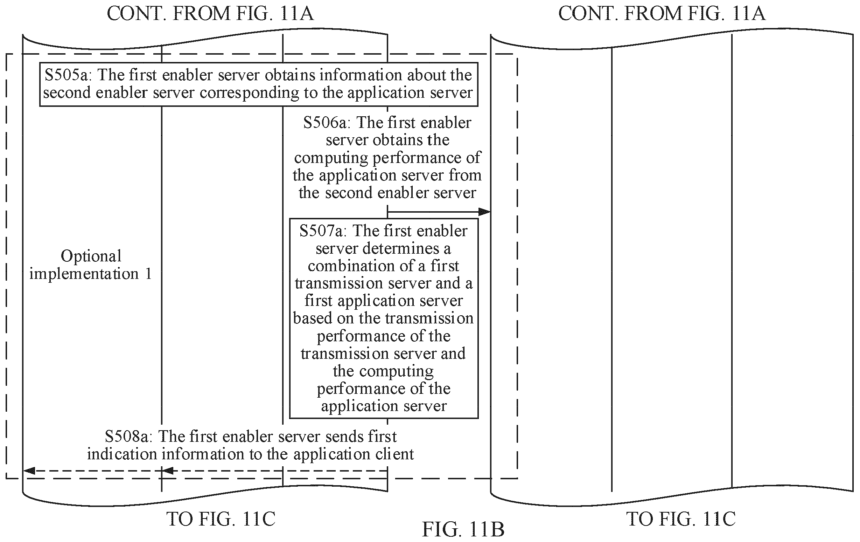

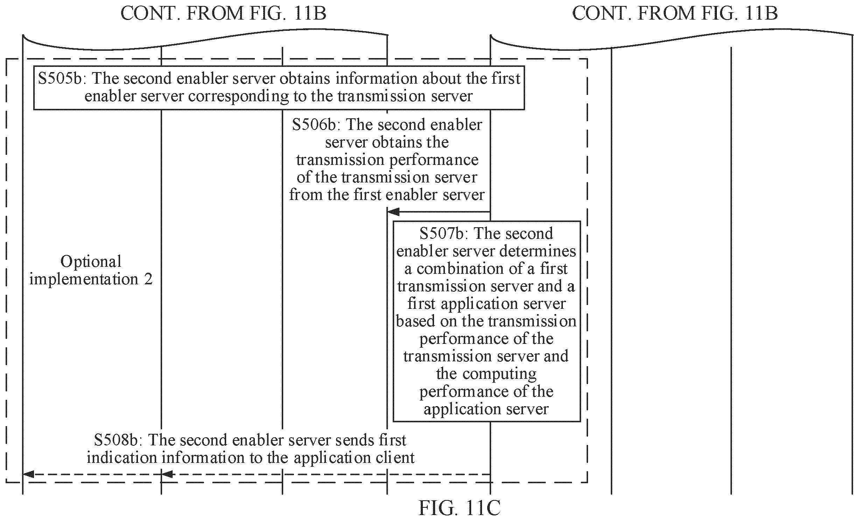

For example, FIG. 11A, FIG. 11B, and FIG. 11C are another schematic flowchart in which an enabler server determines a combination of a first transmission server and a first application server based on transmission performance of a transmission server and computing performance of an application server according to this application. The following steps are included.

S501: The application server obtains the computing performance.

S502: A second enabler server obtains information about the application server, where the information about the application server includes at least the computing performance of the application server.

S503: The transmission server obtains the transmission performance.

S504: A first enabler server obtains information about the transmission server, where the information about the transmission server includes at least the transmission performance of the transmission server.

For specific implementations of S501 to S504, refer to corresponding descriptions in S201 to S204. Details are not described herein again.

S505a: The first enabler server obtains information about the second enabler server corresponding to the application server.

For example, it is assumed that an entity that performs selection is a first EES corresponding to the SEALDD server (that is, the first EES is a primary EES). In this case, the first EES may obtain, by using an EAS discovery procedure, the VAL server and a second EES corresponding to the VAL server. For example, an EEC sends a first server discovery request message to the first EES, where the message includes an EEC ID, an SEALDD server ID, an AC service KPI, a UE location, and information about the second EES corresponding to the VAL server (such as an identifier of the second EES, and an address of the second EES).

Optionally, the primary EES may be selected in a plurality of manners. For example, the EEC obtains an EES to which the SEALDD server registers and an EES to which the VAL server registers that are fed back by an ECS in a service provisioning procedure or the EAS discovery procedure, and the EEC may select any one of the foregoing EESs as the primary EES (depending on EEC execution logic). Alternatively, in the EAS discovery procedure, an ECS feeds back information about a plurality of EESs to the EEC, and feeds back indication information indicating whether one of the plurality of EESs is the primary EES. The indication information indicating the primary EES may be determined by the ECS, or may be configured in the EES. This is not limited in this application. For example, in the service provisioning procedure or the EAS discovery procedure, the EES sends an EES registration request message to the ECS, where the message carries an identifier of the EES and identification information of a server that registers to the EES (such as an SEALDD server ID or a VAL server ID), and indication information indicating whether the EES is the primary EES. The ECS feeds back an EES registration response message to the EES. The EEC executes a service provisioning request on the ECS. The ECS feeds back a discovered EES message to the EEC, where the message includes indication information indicating whether the EES is the primary EES.

S506a: The first enabler server obtains the computing performance of the application server from the second enabler server.

For example, the first EES sends, to the second EES, a message for requesting to obtain information about the VAL server, where the message includes the identifier of the VAL server and the like. Correspondingly, the second EES feeds back, to the first EES, the information about the corresponding VAL server, where the information includes the identifier of the VAL server, an address of the VAL server, and the computing performance corresponding to the VAL server.

It may be understood that specific implementations of S505a and S506a correspond to Obtaining manner 4 in S101.

S507a: The first enabler server determines the combination of the first transmission server and the first application server based on the transmission performance of the transmission server and the computing performance of the application server.

For a specific implementation of S507a, refer to steps performed by the first entity in S102. Details are not described herein again.

Optionally, after S507a, the following step is further included.

S508a: The first enabler server sends first indication information to an application client, where the first indication information indicates the application client to use the first transmission server to enable data transmission of the first application server.

For a specific implementation of S508a, refer to descriptions in S206. Details are not described herein again.

S505b: The second enabler server obtains information about the first enabler server corresponding to the transmission server.

For example, it is assumed that an entity that performs selection is a second EES corresponding to the VAL server (that is, the second EES is a primary EES). In this case, the second EES may obtain, by using an EAS discovery procedure, the SEALDD server and a first EES corresponding to the SEALDD server. For example, an EEC sends a second server discovery request message to the second EES, where the message includes an EEC ID, a VAL server ID, an AC service KPI, a UE location, and information about the first EES corresponding to the SEALDD server (such as an identifier of the first EES, and an address of the first EES).

S506b: The second enabler server obtains the transmission performance of the transmission server from the first enabler server.

For example, the second EES sends, to the first EES, a message for requesting to obtain information about the SEALDD server, where the message includes an identifier of the SEALDD server and the like. Correspondingly, the first EES feeds back, to the second EES, the information about the corresponding SEALDD server, where the information includes the identifier of the SEALDD server, an address of the SEALDD server, and the transmission performance corresponding to the SEALDD server.

It may be understood that specific implementations of S505b and S506b correspond to Obtaining manner 5 in S101.

S507b: The second enabler server determines the combination of the first transmission server and the first application server based on the transmission performance of the transmission server and the computing performance of the application server.

For a specific implementation of S507b, refer to steps performed by the first entity in S102. Details are not described herein again.

Optionally, after S507b, the following step is further included.

S508b: The second enabler server sends first indication information to an application client, where the first indication information indicates the application client to use the first transmission server to enable data transmission of the first application server.

For a specific implementation of S508b, refer to descriptions in S206. Details are not described herein again.

It may be understood that S505a to S508a and S505b to S508b are two different implementations (that is, parallel solutions) in a same procedure.

In the foregoing Example 3 and Example 4, the VAL server and the SEALDD server are deployed in or register to different EESs. In this case, the EES or the EEC may comprehensively consider the transmission performance provided by the transmission server and the computing performance provided by the application server, to select the combination of the transmission server and the application server. This helps satisfy an application requirement and/or provide optimal transmission performance and computing performance. In addition, the EES or the EEC may further provide indication information indicating to use the SEALDD server to perform transmission, so that the AC may be connected to the VAL server via the SEALDD server, instead of being separately connected to the SEALDD server or the VAL server.

Example 5: After VAL servers discover SEALDD servers by using a CAPIF, the VAL servers or the SEALDD servers report transmission performance of the SEALDD servers and computing performance of the VAL servers or comprehensive information of transmission performance of the SEALDD servers and computing performance of the VAL servers to an EES. The EES selects a combination of a first VAL server and a first SEALDD server from a plurality of combinations of the VAL servers and the SEALDD servers based on the transmission performance of the SEALDD servers and the computing performance of the VAL servers. Optionally, some steps in this example may include two optional implementations.

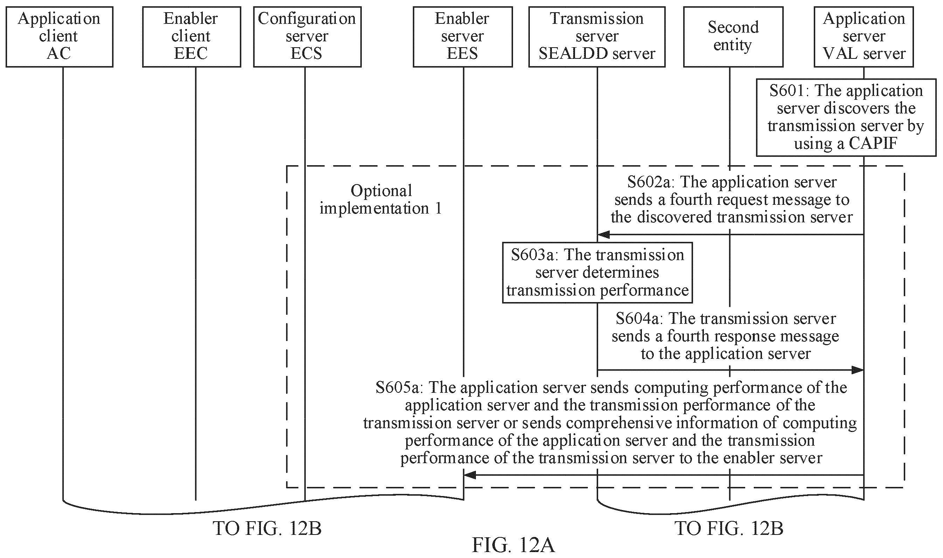

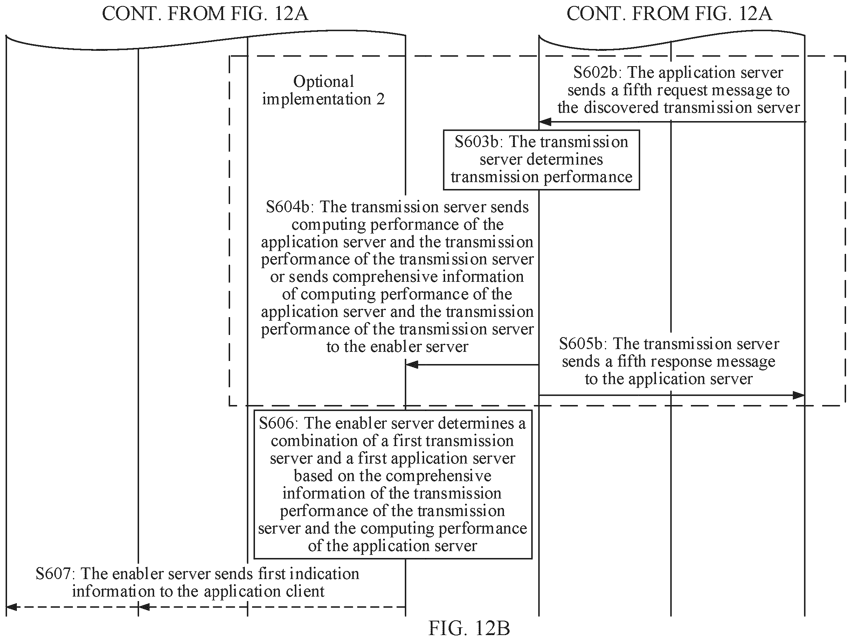

For example, FIG. 12A and FIG. 12B are a schematic flowchart in which an enabler server determines a combination of a first transmission server and a first application server based on comprehensive information of transmission performance of a transmission server and computing performance of an application server according to this application. The following steps are included.

S601: The application server discovers the transmission server by using a CAPIF.

For example, the VAL server may discover the transmission server by using a procedure in which the VAL server discovers the SEALDD server by using the CAPIF described in Section 4 in Part I. Details are not described herein again.

S602a: The application server sends a fourth request message to the discovered transmission server, where the fourth request message includes information about the application server.

For example, the VAL server sends the fourth request message to the SEALDD server discovered in S601, to request to obtain the transmission performance of the SEALDD server. The fourth request message includes an identifier of the VAL server, an address of the VAL server, and the like.

S603a: The transmission server obtains the transmission performance.

For a specific implementation of S603a, refer to corresponding descriptions in S203. Details are not described herein again.

S604a: The transmission server sends a fourth response message to the application server, where the fourth response message includes at least the transmission performance of the transmission server.

For example, the SEALDD server sends the fourth response message to the VAL server, where the message is for feeding back the transmission performance of the SEALDD server. The fourth response message includes an identifier of the SEALDD server, an address of the SEALDD server, the transmission performance of the SEALDD server, and the like.

S605a: The application server sends the computing performance of the application server and the transmission performance of the transmission server or sends the comprehensive information of the computing performance of the application server and the transmission performance of the transmission server to the enabler server.

Case 1: The application server does not comprehensively process the computing performance of the application server and the transmission performance of the transmission server, but directly sends the computing performance of the application server and the transmission performance of the transmission server to the enabler server. The enabler server performs comprehensive processing to obtain the comprehensive information of the computing performance of the application server and the transmission performance of the transmission server.

For example, the VAL server sends fourth information to an EES (or an EES obtains fourth information from the VAL server), where the fourth information includes the identifier of the VAL server, the address of the VAL server, the identifier of the SEALDD server, the address of the SEALDD server, the computing performance of the VAL server, and the transmission performance of the SEALDD server. The EES may determine the comprehensive information of the computing performance of the application server and the transmission performance of the transmission server based on the foregoing information.

Case 2: The application server comprehensively processes the computing performance of the application server and the transmission performance of the transmission server, to obtain the comprehensive information of the computing performance of the application server and the transmission performance of the transmission server, and then sends the comprehensive information to the enabler server.

For example, the VAL server sends fourth information to an EES (or an EES obtains fourth information from the VAL server), where the fourth information includes the identifier of the VAL server, the address of the VAL server, the identifier of the SEALDD server, the address of the SEALDD server, and the comprehensive information of the computing performance of the VAL server and the transmission performance of the SEALDD server.

S602b: The application server sends a fifth request message to the discovered transmission server, where the fifth request message includes at least the computing performance of the application server.

For example, the VAL server sends the fifth request message to the SEALDD server discovered in S601, where the fifth request message includes an identifier of the VAL server, an address of the VAL server, the computing performance of the VAL server, and the like.

S603b: The transmission server obtains the transmission performance.

For a specific implementation of S603a, refer to corresponding descriptions in S203. Details are not described herein again.

S604b: The transmission server sends the computing performance of the application server and the transmission performance of the transmission server or sends the comprehensive information of the computing performance of the application server and the transmission performance of the transmission server to the enabler server.

Case 1: The transmission server does not comprehensively process the computing performance of the application server and the transmission performance of the transmission server, but directly sends the computing performance of the application server and the transmission performance of the transmission server to the enabler server. The enabler server performs comprehensive processing to obtain the comprehensive information of the computing performance of the application server and the transmission performance of the transmission server.

For example, the SEALDD server sends fourth information to an EES (or an EES obtains fourth information from the SEALDD server), where the fourth information includes the identifier of the VAL server, the address of the VAL server, an identifier of the SEALDD server, an address of the SEALDD server, the computing performance of the VAL server, and the transmission performance of the SEALDD server. The EES may determine the comprehensive information of the computing performance of the application server and the transmission performance of the transmission server based on the foregoing information.

Case 2: The transmission server comprehensively processes the computing performance of the application server and the transmission performance of the transmission server, to obtain the comprehensive information of the computing performance of the application server and the transmission performance of the transmission server, and then sends the comprehensive information to the enabler server.

For example, the SEALDD server sends fourth information to an EES (or an EES obtains fourth information from the SEALDD server), where the fourth information includes the identifier of the VAL server, the address of the VAL server, an identifier of the SEALDD server, an address of the SEALDD server, and the comprehensive information of the computing performance of the VAL server and the transmission performance of the SEALDD server.

S605b: The transmission server sends a fifth response message to the application server, where the fifth response message includes information about the transmission server.

It may be understood that S602a to S605a and S602b to S605b are two different implementations (that is, parallel solutions) in a same procedure. It may be understood that S605a and S604b correspond to Obtaining manner 6 described in S101.

S606: The enabler server determines the combination of the first transmission server and the first application server based on the comprehensive information of the transmission performance of the transmission server and the computing performance of the application server.

For a specific implementation of S606, refer to steps performed by the first entity in S102. Details are not described herein again.

Optionally, after S606, the following step is further included.

S607: The enabler server sends first indication information to an application client, where the first indication information indicates the application client to use the first transmission server to enable data transmission of the first application server.

For a specific implementation of S607, refer to corresponding descriptions in S206. Details are not described herein again.

Example 6: After VAL servers discover SEALDD servers by using a CAPIF, the VAL servers or the SEALDD servers report transmission performance of the SEALDD servers and computing performance of the VAL servers or comprehensive information of transmission performance of the SEALDD servers and computing performance of the VAL servers to an EES. The EEC selects a combination of a first VAL server and a first SEALDD server from a plurality of combinations of the VAL servers and the SEALDD servers based on the transmission performance of the SEALDD servers and the computing performance of VAL servers. That is, an entity that performs selection in Example 5 and an entity that performs selection in Example 6 are different. In Example 5, the entity is an EES, and in Example 6, the entity is an EEC. Optionally, some steps in this example may include two optional implementations.

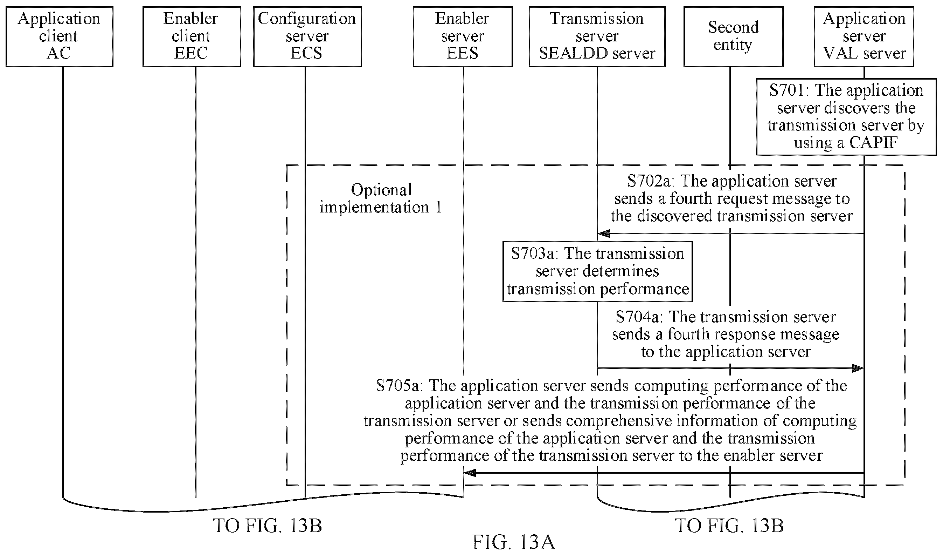

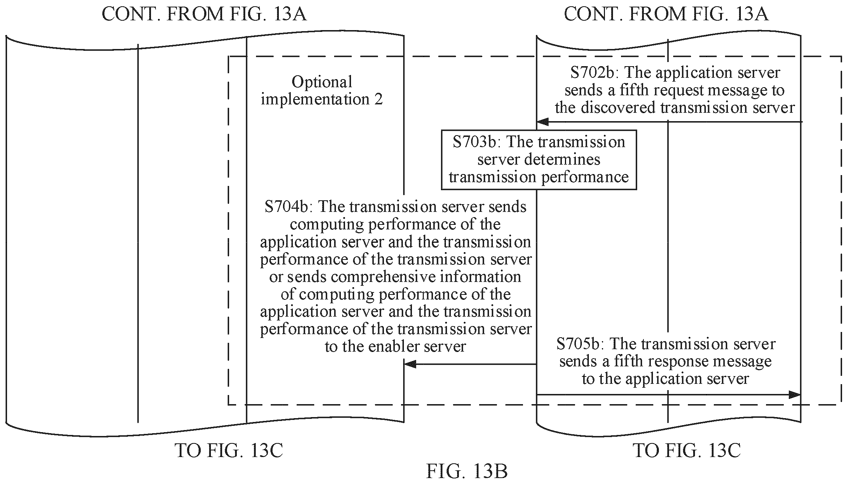

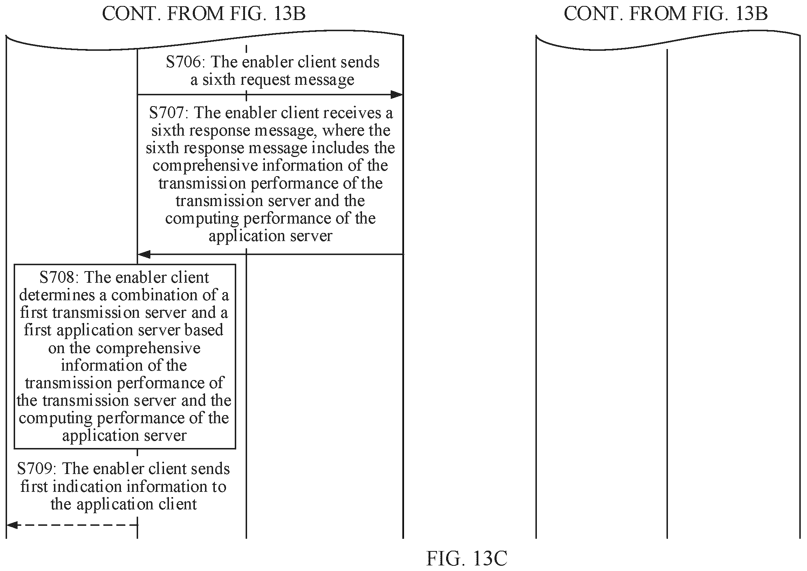

For example, FIG. 13A, FIG. 13B, and FIG. 13C are a schematic flowchart in which an enabler client determines a combination of a first transmission server and a first application server based on comprehensive information of transmission performance of a transmission server and computing performance of an application server according to this application. The following steps are included.

S701: The application server discovers the transmission server by using a CAPIF.

S702a: The application server sends a fourth request message to the discovered transmission server, where the fourth request message includes information about the application server.

S703a: The transmission server obtains the transmission performance.

S704a: The transmission server sends a fourth response message to the application server, where the fourth response message includes at least the transmission performance of the transmission server.

S705a: The application server sends the computing performance of the application server and the transmission performance of the transmission server or sends the comprehensive information of the computing performance of the application server and the transmission performance of the transmission server to an enabler server.

For specific implementations of S701 to S705a, refer to descriptions corresponding to S601 to S605a in Example 5. Details are not described herein again.

S702b: The application server sends a fifth request message to the discovered transmission server, where the fifth request message includes at least the computing performance of the application server.

S703b: The transmission server obtains the transmission performance.

S704b: The transmission server sends the computing performance of the application server and the transmission performance of the transmission server or sends the comprehensive information of the computing performance of the application server and the transmission performance of the transmission server to an enabler server.

S705b: The transmission server sends a fifth response message to the application server, where the fifth response message includes information about the transmission server.

For specific implementations of S702b to S705b, refer to descriptions corresponding to S602b to S605b in Example 5. Details are not described herein again. It may be understood that S705a and S704b correspond to Obtaining manner 6 described in S101.

It may be understood that S702a to S705a and S702b to S705b are two different implementations (that is, parallel solutions) in a same procedure.

S706: The enabler client sends a sixth request message, where the sixth request message includes identification information of the transmission server and identification information of the application server.

For example, an EEC sends the sixth request message to an EES, where the message is for requesting to obtain the comprehensive information of the computing performance of the application server and the transmission performance of the transmission server.

S707: The enabler client receives a sixth response message, where the sixth response message includes the comprehensive information of the transmission performance of the transmission server and the computing performance of the application server.

For example, the EES sends the sixth response message to the EEC, where the message includes an identifier of the SEALDD server, an address of the SEALDD server, an identifier of the VAL server, an address of the VAL server, and comprehensive information of the transmission performance of the SEALDD server and the computing performance of the VAL server.

S708: The enabler client determines the combination of the first transmission server and the first application server based on the comprehensive information of the transmission performance of the transmission server and the computing performance of the application server.

For a specific implementation of S708, refer to steps performed by the first entity in S102. Details are not described herein again.

Optionally, after S708, the following step is further included.

S709: The enabler client sends first indication information to an application client, where the first indication information indicates the application client to use the first transmission server to enable data transmission of the first application server.

For a specific implementation of S709, refer to corresponding descriptions in S308. Details are not described herein again.

Example 7: In a process in which VAL servers discover SEALDD servers by using a CAPIF, the VAL servers report computing performance of the VAL servers to a third entity (a core functional entity of the CAPIF), and the SEALDD servers report transmission performance of the SEALDD servers to the third entity. The third entity selects a combination of a first VAL server and a first SEALDD server from a plurality of combinations of the VAL servers and the SEALDD servers based on the transmission performance of the SEALDD servers and the computing performance of the VAL servers. That is, an entity that performs selection in Example 7 is the third entity, and is different from entities (EESs or EECs) that perform selection in Examples 1 to 6. It may be understood that the third entity in this application is an entity participating in SEALDD discovery and selection in an SEALDD discovery process, for example, a CAPIF core function (CAPIF core function, CCF) entity, or may be an entity having a function similar to that of a CCF in subsequent standard evolution. This is not limited in this application.

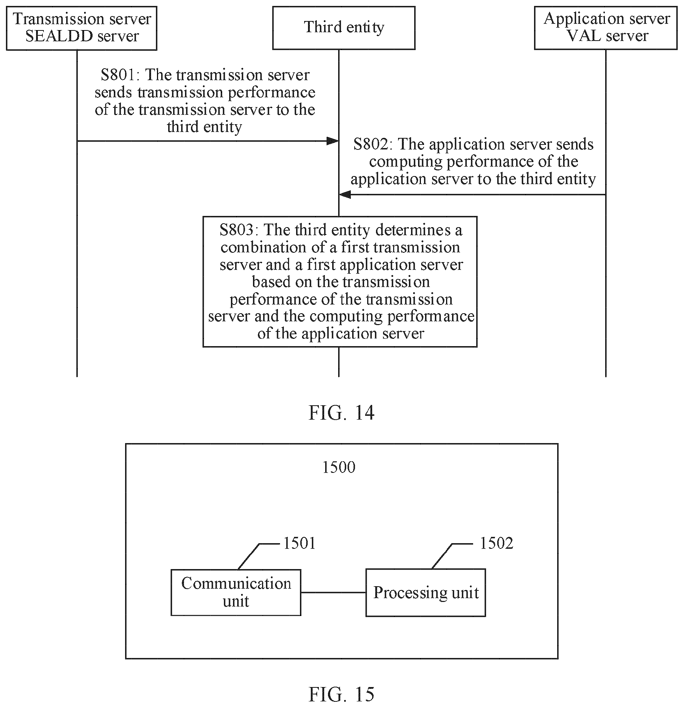

For example, FIG. 14 is a schematic flowchart in which a third entity determines a combination of a first transmission server and a first application server based on transmission performance of a transmission server and computing performance of an application server according to this application. The following steps are included.

S801: The transmission server sends the transmission performance of the transmission server to the third entity.

For example, the SEALDD server sends a first message to a CCF, where the first message includes API information of the SEALDD server, the transmission performance of the SEALDD server, and the like.

S802: The application server sends the computing performance of the application server to the third entity.

For example, the VAL server sends a second message to the CCF, where the second message includes the computing performance of the VAL server.

Optionally, bearer messages of S801 and S802 are not limited in this application. For example, the VAL server or the SEALDD server sends a registration request message, a registration update request message, or the like to the CCF.

S803: The third entity determines the combination of the first transmission server and the first application server based on the transmission performance of the transmission server and the computing performance of the application server.

For a specific implementation of S803, refer to steps performed by the first entity in S102. Details are not described herein again.

In Example 7, the third entity may also obtain the transmission performance of the transmission server and the computing performance of the application server, to determine the combination of the transmission server and the application server. This helps the SEALDD server and the VAL server jointly satisfy a performance requirement of a VAL application.

To implement the functions in the method provided in this application, the apparatus or the device provided in this application may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. The module division in this application is an example, and is merely logical function division. There may be another division manner during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 15 is a diagram of a communication apparatus according to this application. The apparatus may include modules in one-to-one correspondence with the methods/operations/steps/actions described in any embodiment shown in FIG. 7 to FIG. 14. The module may be implemented by a hardware circuit, software, or a combination of a hardware circuit and software.

The apparatus 1500 includes a communication unit 1501 and a processing unit 1502, configured to implement the method performed by each device in the foregoing embodiments.

In a possible implementation, the apparatus is an edge enabler server EES or an edge enabler client EEC, or is located in the edge enabler server EES or the edge enabler client EEC. Specifically, the communication unit 1501 is configured to obtain transmission performance of a transmission server and computing performance of an application server. The processing unit 1502 is configured to determine a combination of a first transmission server and a first application server based on the transmission performance of the transmission server and the computing performance of the application server.

For specific execution procedures of the communication unit 1501 and the processing unit 1502 in this implementation, refer to descriptions of steps performed by the first entity in the foregoing method embodiments and corresponding descriptions in the summary. Details are not described herein again. In a communication method implemented by the apparatus, the transmission performance provided by the transmission server and the computing performance provided by the application server may be comprehensively considered, so that the combination of the transmission server and the application server is discovered and/or selected. This helps satisfy an application requirement and/or provide optimal transmission performance and computing performance.

In a possible implementation, the apparatus is a transmission server (for example, an SEALDD server), or is located in a transmission server. Specifically, the processing unit 1502 is configured to obtain transmission performance of the transmission server. The communication unit 1501 is configured to send the transmission performance of the transmission server.

For specific execution procedures of the communication unit 1501 and the processing unit 1502 in this implementation, refer to descriptions of steps performed by the transmission server in the foregoing method embodiments and corresponding descriptions in the summary. Details are not described herein again. In a communication method implemented by the apparatus, the transmission server may determine the transmission performance of the transmission server, and report the transmission performance of the transmission server to a first entity (for example, an EES). This helps the first entity comprehensively consider the transmission performance provided by the transmission server and computing performance provided by an application server, to discover and/or select a combination of a transmission server and an application server.

In a possible implementation, the apparatus is an application server (for example, a VAL server), or is located in an application server. Specifically, the processing unit 1502 is configured to obtain computing performance of the application server. The communication unit 1501 is configured to send the computing performance of the application server.

For specific execution procedures of the communication unit 1501 and the processing unit 1502 in this implementation, refer to descriptions of steps performed by the application server in the foregoing method embodiments and corresponding descriptions in the summary. Details are not described herein again. In a communication method implemented by the apparatus, the application server may determine the computing performance of the application server, and report the computing performance of the application server to a first entity (for example, an EES). This helps the first entity comprehensively consider transmission performance provided by a transmission server and the computing performance provided by the application server, to discover and/or select a combination of a transmission server and an application server.

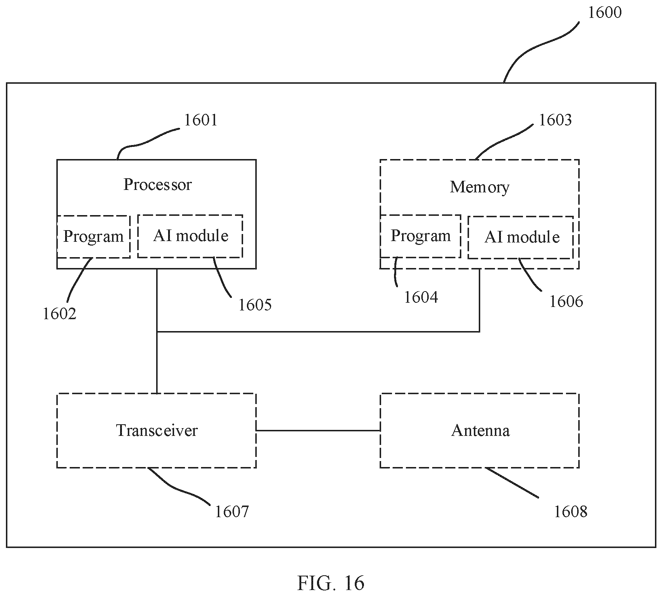

FIG. 16 is a diagram of another communication apparatus according to this application. The communication apparatus is configured to implement the communication method in the foregoing method embodiments. It may be understood that the communication apparatus 1600 includes necessary forms, such as modules, units, elements, circuits, or interfaces, and the necessary forms included in the communication apparatus 1600 are properly configured together to perform the method in this application. For example, the communication apparatus 1600 may be a functional entity such as an enabler server, an enabler client, a transmission server, or an application server, or may be a component (for example, a chip) in the functional entity, and is configured to implement the method described in the foregoing method embodiments. The communication apparatus 1600 includes one or more processors 1601. The processor 1601 may be a general-purpose processor, a dedicated processor, or the like, for example, may be a baseband processor or a central processing unit. The baseband processor may be configured to process a communication protocol and communication data. The central processing unit may be configured to: control the communication apparatus, execute a software program, and process data of the software program.

Optionally, the processor 1601 may include a program 1602 (which may also be referred to as code or instructions sometimes). The program 1602 may be run on the processor 1601, so that the communication apparatus 1600 performs the method described in the foregoing embodiments. In another possible design, the communication apparatus 1600 includes a circuit (not shown in FIG. 16). The circuit is configured to implement functions of function entities such as the enabler server, the enabler client, the transmission server, and the application server in the foregoing embodiments.

Optionally, the communication apparatus 1600 may include one or more memories 1603, and the memory 1603 stores a program 1604 (which may also be referred to as code or instructions sometimes). The program 1604 may be run on the processor 1601, so that the communication apparatus 1600 performs the method described in the foregoing method embodiments.

Optionally, the processor 1601 and/or the memory 1603 may include AI modules 1605 and 1606. The AI module is configured to implement an AI-related function. The AI module may be implemented by using software, hardware, or a combination of software and hardware. For example, the AI module may include an RIC module. For example, the AI module may be a near-real-time RIC or a non-real-time RIC.

Optionally, the communication apparatus 1600 further includes a transceiver 1607 and an antenna 1608. The transceiver 1607 and the antenna 1608 can implement receiving and sending functions, for example, communicate with another device via a transmission medium, so that the communication apparatus 1600 can communicate with the another device.

In a possible implementation, the apparatus is an edge enabler server EES or an edge enabler client EEC, or is located in the edge enabler server EES or the edge enabler client EEC. Specifically, the transceiver 1607 and the antenna 1608 are configured to obtain transmission performance of a transmission server and computing performance of an application server. The processor 1601 is configured to determine a combination of a first transmission server and a first application server based on the transmission performance of the transmission server and the computing performance of the application server.

For a specific execution procedure of the communication apparatus 1600 in this implementation, refer to descriptions of steps performed by the first entity in the foregoing method embodiments and corresponding descriptions in the summary. Details are not described herein again. In a communication method implemented by the apparatus, the transmission performance provided by the transmission server and the computing performance provided by the application server may be comprehensively considered, so that the combination of the transmission server and the application server is discovered and/or selected. This helps satisfy an application requirement and/or provide optimal transmission performance and computing performance.

In a possible implementation, the apparatus is a transmission server (for example, an SEALDD server), or is located in a transmission server. Specifically, the processor 1601 is configured to obtain transmission performance of the transmission server. The transceiver 1607 and the antenna 1608 are configured to send the transmission performance of the transmission server.

For a specific execution procedure of the communication apparatus 1600 in this implementation, refer to descriptions of steps performed by the transmission server in the foregoing method embodiments and corresponding descriptions in the summary. Details are not described herein again. In a communication method implemented by the apparatus, the transmission server may determine the transmission performance of the transmission server, and report the transmission performance of the transmission server to a first entity (for example, an EES). This helps the first entity comprehensively consider the transmission performance provided by the transmission server and computing performance provided by an application server, to discover and/or select a combination of a transmission server and an application server.

In a possible implementation, the apparatus is an application server (for example, a VAL server), or is located in an application server. Specifically, the processor 1601 is configured to obtain computing performance of an application server. The transceiver 1607 and the antenna 1608 are configured to send the computing performance of the application server.

For a specific execution procedure of the communication apparatus 1600 in this implementation, refer to descriptions of steps performed by the application server in the foregoing method embodiments and corresponding descriptions in the summary. Details are not described herein again. In a communication method implemented by the apparatus, the application server may determine the computing performance of the application server, and report the computing performance of the application server to a first entity (for example, an EES). This helps the first entity comprehensively consider transmission performance provided by a transmission server and the computing performance provided by the application server, to discover and/or select a combination of a transmission server and an application server.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, such as a hard disk drive (hard disk drive, HDD), or a solid-state drive (solid-state drive, SSD), or may be a volatile memory (volatile memory), such as, a random access memory (random access memory, RAM). The memory is any other medium that can carry or store expected program code in an instruction form or a data structure form and that can be accessed by a computer, but is not limited thereto. The memory in this application may alternatively be a circuit or any other apparatus that can implement a storage function, and is configured to store program instructions and/or data.

This application provides another communication apparatus. The device includes a processor and an interface. Optionally, the apparatus further includes a memory. The processor is coupled to the memory. The processor is configured to read and execute computer instructions stored in the memory, to implement the communication method in embodiments shown in FIG. 7 to FIG. 14.

This application provides a communication system. The communication system includes one or more of the entities or the devices in embodiments shown in FIG. 7 to FIG. 14.

This application provides a computer-readable storage medium. The computer-readable storage medium stores a program or instructions. When the program or the instructions are run on a computer, the computer is enabled to perform the communication method in embodiments shown in FIG. 7 to FIG. 14.

This application provides a computer program product. The computer program product includes instructions. When the instructions are run on a computer, the computer is enabled to perform the communication method in embodiments shown in FIG. 7 to FIG. 14.

This application provides a chip or a chip system. The chip or the chip system includes at least one processor and an interface. The interface and the at least one processor are interconnected through a line. The at least one processor is configured to run a computer program or instructions, to perform the communication method in embodiments shown in FIG. 7 to FIG. 14.

The interface in the chip may be an input/output interface, a pin, a circuit, or the like.

The chip system may be a system on a chip (system on a chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register, a cache, or the like, or may be a storage unit (for example, a read-only memory, a random access memory, or the like) of the chip.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, a digital subscriber line (digital subscriber line, DSL)) or wireless (for example, infrared, radio, microwave, or the like) manner. The computer-readable storage medium may be any usable medium that can be accessed by a computer, or a data storage device, for example, a server, a data center, or the like, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference may be made between embodiments. For example, mutual reference may be made between methods and/or terms in method embodiments, mutual reference may be made between functions and/or terms in apparatus embodiments, and mutual reference may be made between functions and/or terms in the apparatus embodiments and the method embodiments.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
obtaining transmission performance of a transmission server and computing performance of an application server; and
determining a combination of a first transmission server and a first application server based on the transmission performance of the transmission server and the computing performance of the application server.

2. The method according to claim 1, wherein the obtaining transmission performance of a transmission server comprises:
receiving the transmission performance of the one or more transmission servers; or
obtaining the transmission performance of the transmission server from a second entity based on identification information and/or address information of the transmission server; or
receiving deployment location information of the one or more transmission servers, wherein
the second entity is an application data analytics enabler server ADAES or a network data analytics function NWDAF.

3. The method according to claim 2, wherein the deployment location information of the transmission server is a data network access identifier DNAI.

4. The method according to claim 1, wherein the obtaining computing performance of an application server comprises:
receiving the computing performance of the one or more application servers; or
obtaining the computing performance of the application server from a second entity based on identification information and/or address information of the application server, wherein the second entity is an application data analytics enabler server ADAES or a network data analytics function NWDAF.

5. The method according to claim 1, wherein the obtaining transmission performance of a transmission server and computing performance of an application server comprises:
receiving the transmission performance of the corresponding transmission server;
obtaining information about a second enabler server corresponding to the application server; and
obtaining the computing performance of the application server from the second enabler server.

6. The method according to claim 1, wherein the obtaining transmission performance of a transmission server and computing performance of an application server comprises:
receiving the computing performance of the corresponding application server;
obtaining information about a first enabler server corresponding to the transmission server; and
obtaining the transmission performance of the transmission server from the first enabler server.

7. The method according to any one of claims 2 to 6, wherein a first entity that obtains the transmission performance of the transmission server and the computing performance of the application server is an edge enabler server EES.

8. The method according to any one of claims 1 to 7, wherein the determining a combination of a first transmission server and a first application server based on the transmission performance of the transmission server and the computing performance of the application server comprises:
determining the combination of the first transmission server and the first application server based on the transmission performance of the transmission server and the computing performance of the application server, to satisfy an application performance requirement, wherein
the application performance requirement is represented by application performance needed by an application client AC service KPI.

9. The method according to any one of claims 1 to 8, wherein the computing performance of the application server is load of the application server.

10. The method according to claim 1, wherein the obtaining transmission performance of a transmission server and computing performance of an application server comprises:
sending a first request message, wherein the first request message comprises identification information of the transmission server and identification information of the application server; and
receiving a first response message, wherein the first response message comprises the transmission performance of the transmission server and the computing performance of the application server.

11. The method according to claim 1, wherein the obtaining transmission performance of a transmission server and computing performance of an application server comprises:
obtaining information about a first enabler server corresponding to the transmission server and information about a second enabler server corresponding to the application server;
obtaining the transmission performance of the transmission server from the first enabler server; and
obtaining the computing performance of the application server from the second enabler server.

12. The method according to claim 10 or 11, wherein a first entity that obtains the transmission performance of the transmission server and the computing performance of the application server is an edge enabler client EEC.

13. The method according to claim 1, wherein the obtaining transmission performance of a transmission server and computing performance of an application server comprises:
receiving the computing performance of the application server and the transmission performance of the transmission server; or
receiving comprehensive information of the computing performance of the application server and the transmission performance of the transmission server, wherein the comprehensive information is determined by the corresponding application server or the corresponding transmission server based on the transmission performance of the transmission server and the computing performance of the application server.

14. The method according to claim 13, wherein a first entity that obtains the transmission performance of the transmission server and the computing performance of the application server is an edge enabler client EEC or an edge enabler server EES.

15. The method according to any one of claims 1 to 14, wherein the method further comprises:
sending first indication information to the application client, wherein the first indication information indicates the application client to use the first transmission server to enable data transmission of the first application server.

16. The method according to any one of claims 1 to 14, wherein the method further comprises:
receiving second indication information from the application server, wherein the second indication information indicates whether the application server supports transmission server-enabled transmission; and
receiving third information from the transmission server, wherein the third information comprises an application type supported by the transmission server.

17. The method according to claim 16, wherein the application type is an identifier of the application server.

18. The method according to any one of claims 1 to 17, wherein the determining a combination of a first transmission server and a first application server based on the transmission performance of the transmission server and the computing performance of the application server comprises:
determining the combination of the first transmission server and the first application server based on whether the application server supports transmission server-enabled transmission, the application type supported by the transmission server, the transmission performance of the transmission server, and the computing performance of the application server.

19. A communication method, comprising:
obtaining transmission performance of a transmission server; and
sending the transmission performance of the transmission server.

20. The method according to claim 19, wherein the obtaining transmission performance of a transmission server comprises:
determining the transmission performance that is of the transmission server and that corresponds to a transmission quality measurement result; or
obtaining the transmission performance of the transmission server from a second entity based on identification information and/or address information of the transmission server; or
determining the transmission performance of the transmission server based on deployment location information of the transmission server, wherein
the transmission quality measurement result comprises transmission quality of a path between the transmission server and a terminal device; and
the second entity is an application data analytics enabler server ADAES or a network data analytics function NWDAF.

21. The method according to claim 19, wherein the method further comprises:
receiving computing performance of an application server; and
sending the computing performance of the application server and the transmission performance of the transmission server, or sending comprehensive information of the computing performance of the application server and the transmission performance of the transmission server.

22. The method according to any one of claims 19 to 21, wherein the method further comprises:
sending third information, wherein the third information comprises an application type supported by the transmission server.

23. The method according to claim 22, wherein the application type is an identifier of the application server.

24. A communication method, comprising:
obtaining computing performance of an application server; and
sending the computing performance of the application server.

25. The method according to claim 24, wherein the obtaining computing performance of an application server comprises:
determining the computing performance of the application server based on load of the application server; or
obtaining the computing performance of the application server from a second entity based on identification information and/or address information of the application server, wherein
the second entity is an application data analytics enabler server ADAES or a network data analytics function NWDAF.

26. The method according to claim 24, wherein the method further comprises:
receiving transmission performance of a transmission server; and
sending the computing performance of the application server and the transmission performance of the transmission server, or sending comprehensive information of the computing performance of the application server and the transmission performance of the transmission server.

27. The method according to any one of claims 24 to 26, wherein the method further comprises:
sending second indication information, wherein the second indication information indicates whether the application server supports transmission server-enabled transmission.

28. A communication apparatus, comprising a communication unit and a processing unit, wherein the communication unit and the processing unit are configured to perform the method according to any one of claims 1 to 27.

29. A communication apparatus, comprising a processor and a memory, wherein the memory is configured to store instructions; and when the instructions are executed by the processor, the communication apparatus is enabled to perform the method according to any one of claims 1 to 27.

30. A computer-readable storage medium, wherein the computer-readable storage medium stores instructions; and when the instructions are run on a computer, the computer is enabled to perform the method according to any one of claims 1 to 27.

31. A chip system, wherein the chip system comprises a processor and an interface; and the processor is configured to execute a computer program, to enable the chip system to implement the method according to any one of claims 1 to 27.

32. A computer program product, comprising instructions, wherein when the instructions are run on a computer, the computer is enabled to perform the method according to any one of claims 1 to 27.
